# EUROPEAN PATENT APPLICATION

(11) **EP 2 551 807 A2**
(43) Date of publication of application: **30.01.2013**
(21) Application number: 12173451.1
(22) Date of filing: 25.06.2012
(51) Int. Cl.: G06Q 10/06

(54) **Automated system for digitized product management**

(30) Priority: 29.06.2011 US 201113171964
(71) Applicant: General Electric Company, Schenectady, NY 12345 (US)
(72) Inventor: Zakrzwski, Raymond Gerard, Greenville, SC South Carolina 29615 (US); Johnson, Richard W., Greenville, SC 29607 (US); Gaulden, Allen C., Greenville, SC South Carolina 29607 (US); Beckman, Mark Edward, Greenville, SC South Carolina 29615 (US); Suri, Ketan, Greenville, SC South Carolina 29607 (US); Doddagattiganabbe, Dinakara Somashankaraiah, Greenville, SC South Carolina 29607 (US); Narayanan, Sampath K., Greenville, SC South Carolina 29607 (US); Pieper, Stefan, 48499 Salzbergen (DE)
(74) Representative: Bedford, Grant Richard

(57) **Abstract**

Systems and methods associated with digitized and automated product management provide for a holistic representation of a product throughout its lifecycle, including physical and non-physical components thereof. More particular features include generation of unit bills of material 414 and application of non-physical components, eg. control parameters, to product units. Features for managing bills of material 414 involve providing a pre-established mapping of technical feature rules that relate commercial feature options for a product to different combinations of technical functions and parts for potential use in a product. Pre-established manufacturing templates are also provided and combined with the mapping to generate an order-specific bill-of-materials, after which point a unit bill-of-materials can be created. Features for digitizing and applying non-physical components, e.g. control parameters, involve establishing a plurality of non-physical components, e.g. control parameter definitions, and database relationships between control parameters and products within a network accessible database. Interfaces may be provided for changing selected aspects of the control parameters, and the parameters are ultimately provided as direct input to a product.

## Description

The subject matter disclosed herein generally relates to automated systems and methods for creating and managing a comprehensive electronic representation and implementation of a product. More particularly, the present subject matter concerns an integrated system for creating, implementing and managing a holistic representation of a product, including virtual and non-virtual, physical and non-physical components thereof.

Speed, simplicity and self-confidence are important elements in becoming and maintaining a competitive business. As competitiveness in a marketplace increases, quickly responding to specific demands within the market becomes increasingly important. If one competitor fails to quickly respond to a consumer's demand, then the consumer's demand may substantially decrease, at least with regard to products of the one competitor. The consumer may use a suitable substitute product from another competitor. Consumer demands are important not only upon initial product selection, but with continued product maintenance and upgrades over the life of a product.

Many factors contribute to slowing the process of bringing a product to market, thereby weakening the competitiveness of a business. Complexity of a product contributes to the difficulties in meeting specific consumer design demands in a timely manner. The complexity of world-wide production, the changing nature of competition, and even the complexity internal to production companies, generally slow the process of bringing a new or even modified product to market.

Other factors contribute to hindering product maintenance over the life cycle of a product. For the many products in today's highly complex industrial operations that include operational features controlled by software, the coordination of such software such that the products run and are monitored in an effective, efficient and expedient fashion is critical.

In order to coordinate and expedite product creation and management, product or materials management software applications have been created. For example, product lifecycle management (PLM) software applications have been developed as an information technology (IT) resource to provide a global environment for developing, describing, managing and communicating digital product knowledge and related information. Some PLM systems enable a company to design and render products virtually, thus avoiding the need to build prototypes. Such systems can save money, parts and other resources as well improve product and workplace safety and ergonomics. Additional needs remain for providing bill-of-materials (BOM) and other product management features within a PLM system or other product definition applications that account for both the physical and non-physical components of a system in order to achieve a holistic representation & management of products.

Specific product information rendered by manufacturers has conventionally been coordinated by employing so-called "Bills of Materials" (BOMs). The term "bill-of-materials", as conventionally understood in the art, refers to an explosion listing of physical parts. Specifically, a product may have many subassemblies, some or all of which may have further subassemblies. A bill-of-materials is a printed-out parts list having indentations where the indentations correspond to a depth of hierarchy of each product in each subassembly. The bill-of-materials traditionally has been utilized during the manufacturing process of an assembly to provide a reference for the relationship of each physical component to other physical components in the assembly. Examples of systems for generating bills of material are described in U.S. Pat. No. 4,847,761 (Ferriter et al.) and U.S. Patent No. 5,119,307 (Blaha et al.).

In conventional BOM systems, such as those disclosed by Ferriter et al. and Blaha et al., management of BOMs can be complicated by the needs of different contributors and consumers of the BOM information. A BOM typically originates in Engineering and provides a list of parts necessary to define a product. The structure of an "Engineering Bill of Material" is determined by a breakdown of systems or logical groupings of parts. In order for a BOM to be used for the purposes of downstream organizations involved in the procurement or assembly of the products, changes needs to be made to the structure of the BOM to accommodate these purposes. These changes may include the grouping parts for purchasing (creating kits) or creating a "Bill of Process" which structures parts into a hierarchy that reflects the manufacturing process.

Normally there are two options to deal with the notion that there are two or more disparate BOM structures. Engineering can create a BOM in the exact fashion Manufacturing needs, or there can be an intermediate translation between the two BOMs. Alternatively, Engineering could maintain a BOM structure for Manufacturing, but this option is limited since it does not enable a global design. In addition, Engineering would need to maintain multiple BOMs depending on the number of manufacturing plants. Maintaining separate BOM structures with a manual translation is error prone, and does not facilitate an efficient change management Process. In an engineer-to-order or configure-to-order product, where each product is unique, significant effort is expended in either of the two traditional models of BOM management. The issue of having multiple BOM structures is further compounded when a BOM is used by service personnel to track the components of a physical instance of a product. The individuals responsible for servicing a product prefer yet another structure which is not equivalent to engineering or manufacturing structures.

As such, a need remains for BOMs to be integrated within a PLM system or other product definition and/or management application and also to reduce the effort and resources required to manage a BOM. In particular, manufacturers desire to eliminate the need for Engineering to manage a Manufacturing structured BOM or for multiple BOMs to be managed. In addition, a need remains to be able maintain a BOM through the lifecycle of the unit, or specific serialized instance of a product.

Another need within product data technology concerns the ability to define, apply, and track both physical and non-physical components of a product. Traditionally, systems which serve the purpose of product definition in industry relate to a virtual representation of physical parts and do not take into consideration or host the non-physical aspects of the product(s). Examples of non-physical components that are increasingly as important to a product as the physical components include product control parameters, i.e. the software-based input data that control how the physical components of a product are configured to operate. These control parameters or other non-physical components of a system need to be defined not only in a general manner for each product, but also for specific serialized instances of each product (i.e., for each "unit") that reflect the product in terms of specific customer needs, uses or locations of use.As such, a need remains for defining and managing a holistic electronic representation of various products, including virtual and non-virtual, physical and non-physical components thereof. In addition to product definition and management, a need also exists for being able to digitally deliver and implement the non-physical components of specific units of a product.

In conventional systems, control inputs defining the non-physical components of a product are derived from different internal and/or third party sources with minimal oversight, resulting in confusion during parameter definition and implementation. Such system control parameters and other non-physical component features are typically implemented by hand at an operation site, introducing many opportunities for human error. In addition, known parameter control processes also fail to provide an ability to aggregate individual unit parameter values across projects. This reduces the ability to efficiently identify projects affected by problematic parameter settings and improve overall system operation. Still further, product parameter management is hindered by disparate systems, non-standard definitions, minimal change control, lack of lifecycle managementof the total product, as well as limited troubleshooting and optimization.

The art is continuously seeking improved systems and methods for electronically creating and tracking digitized product records, particularly including those related to BOM and non-physical components such as parameter definitions within PLM or other product definition & management systems.

One exemplary embodiment of the present invention concernsa method of electronically creating and managing a bill-of-materials for order-specific product configurations. Such method may include a step of electronically providing a pre-established mapping of technical feature rules that relate commercial feature options for a product that are available for selection by a customer to different combinations of technical functions and parts for potential use in the product. An order-specific bill-of-materials is electronically generated based on commercial feature options provided as input and the pre-established mapping of technical features, wherein the order-specific bill-of-materials comprises an order-specific list of different combinations of technical functions and parts for a given product configuration. A pre-established manufacturing template that maps the functions of a product to a logical manufacturing structure is also provided. A unit bill-of-materials is generated by combining selected aspects of the order-specific bill-of-materials with the pre-established manufacturing template associated with that particular type of product. Finally, a graphical user interface configured for viewing one or more of the electronically generated order-specific bill-of-materials and the unit bill-of-materials is provided.

Another exemplary embodiment of the presently disclosed technology concerns a method of electronically defining and applying non-physical control parameters or other non-physical components for a product within a product lifecycle management application. Such method includes a step of electronically establishing a plurality of control parameter definitions within a network accessible database. The control parameter definitions comprise software variables that allow the hardware components of a product to be controlled or monitored to perform in a particular manner during product operation by selecting particular control parameter values for selected control parameter definitions. A plurality of databaserelationships are electronically established between predetermined control parameter values and selected products based on the product model, features or specific components used in the product. An electronic interface is provided for changing selected aspects of the control parameter definitions, control parameter values and the database relationships between the control parameter values and a product. Direct input of selected control parameter values is provided to a control system associated with the product such that the product (unit) is controlled or monitored to operate in accordance with the performance definitions dictated by the control parameter definitions and control parameter values.

The invention, in accordance with preferred and exemplary embodiments, together with further advantages thereof, is more particularly described in the following detailed description taken in conjunction with the accompanying drawings in which:
Fig. 1 is a block diagram of a prior art bill-of-material generation system;
Fig. 2 is a block diagram of a prior art document storage system and method for coordinating the uniformity of control parameters;
Fig. 3 is a block diagram of a product lifecycle management (PLM) application, including particular software modules within the PLM application and user interface features for accessing the PLM application;
Fig. 4 is a block diagram of an exemplary unit bill-of-materials software module;
Fig. 5 illustrates a flow chart of exemplary steps in a method of electronically creating and managing a bill-of-material for an order-specific product configuration;
Fig. 6 illustrates an exemplary representation of results from a product definition module within a bill-of-materials software module that establishes a technical product hierarchy data structure, a commercial product hierarchy data structure and relationship rules between the two data structures;
Fig. 7 illustrates an exemplary order-specific product definition data structure for use within a bill-of-materials software module to establish product definitions and relationships between a specifically ordered commercial product and technical product;
Fig. 8 illustrates an order-specific configuration bill-of-materials data structure that is generated as part of an order-specific product configuration module within a bill-of-materials software module;
Fig. 9 illustrates an exemplary product manufacturing template for use as part of a product manufacturing module within a bill-of-materials software module;
Fig. 10 illustrates an exemplary serialized product bill-of-materials (Unit BOM) created from an order-specific configuration bill-of-materials and a product manufacturing template;
Fig. 11 illustrates a first exemplary Unit BOM visualization, namely a Unit BOM engineering view for display to a user of the subject application;
Fig. 12 illustrates a second exemplary Unit BOM visualization, namely a Unit BOM manufacturing view for display to a user of the subject application;
Figs. 13 and 14 illustrate aspects of an exemplary alternate parts definition data structure that may be implemented as part of a change module feature of the subject bill-of-materials software module, where:

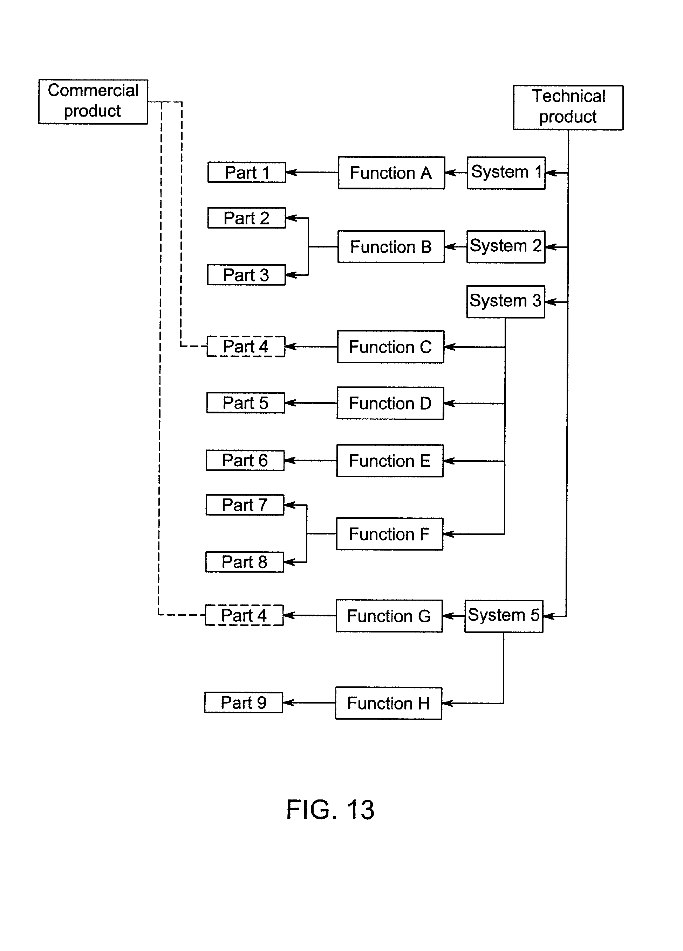

Fig. 13 shows an exemplary technical product hierarchy data structure before alternate parts are defined; and

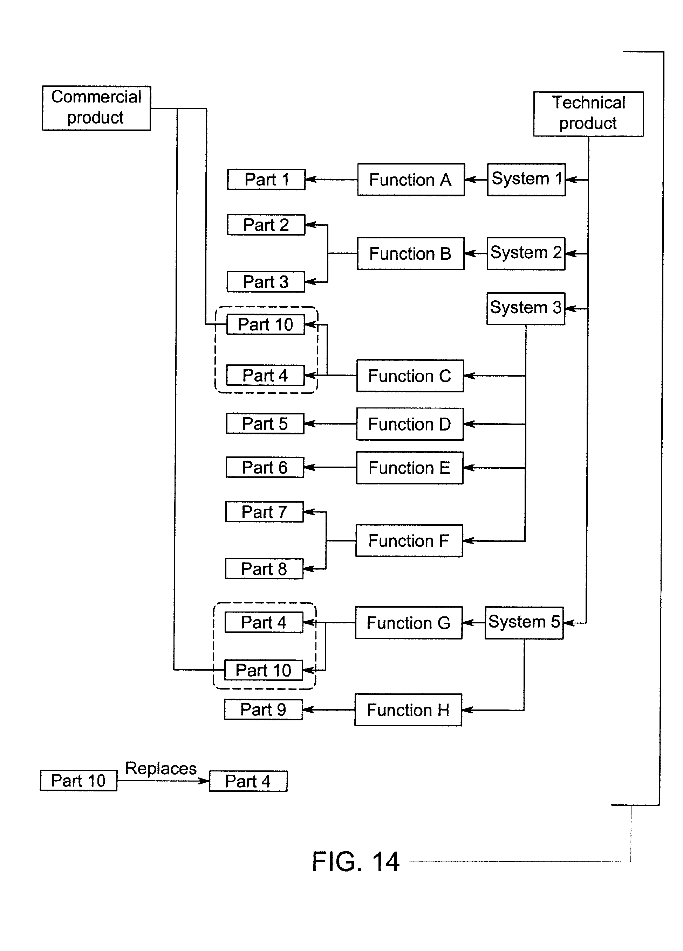

Fig. 14 shows an exemplary technical product hierarchy data structure after alternate parts are defined;

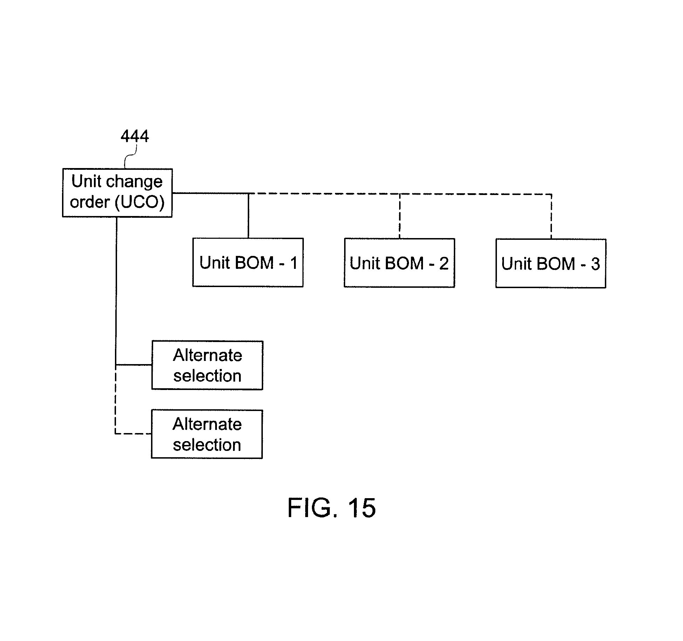

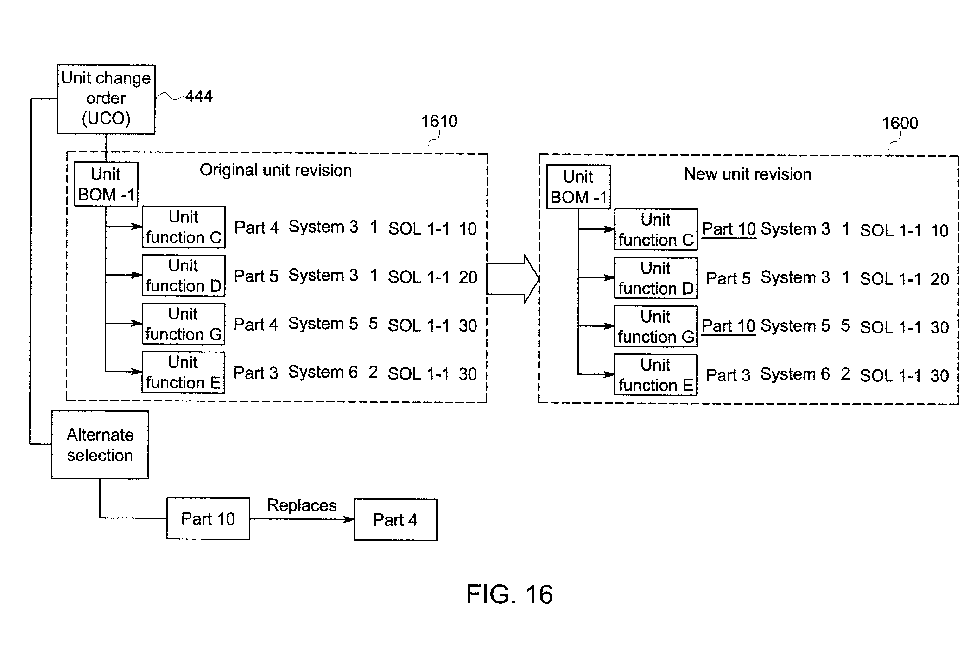

Figs. 15 and 16 illustrate aspects of an exemplary unit change order (UCO) that may be implemented as part of a change module feature of the subject bill-of-materials software module after alternate parts are selected in accordance with an alternate parts module;

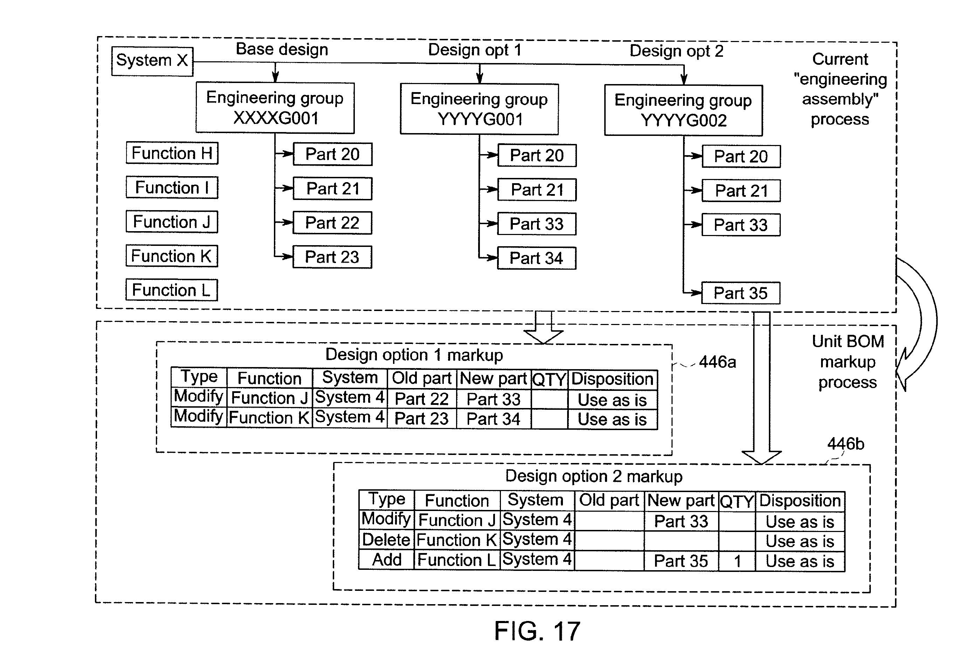

Figs. 17-21, respectively, illustrate aspects of an exemplary Unit BOM Markup that may be implemented as part of a change module feature of the subject bill-of-materials software module, where:
Fig. 17 represents features associated with creating a data structure of net changes to a Unit BOM, namely the Unit BOM Markup; and

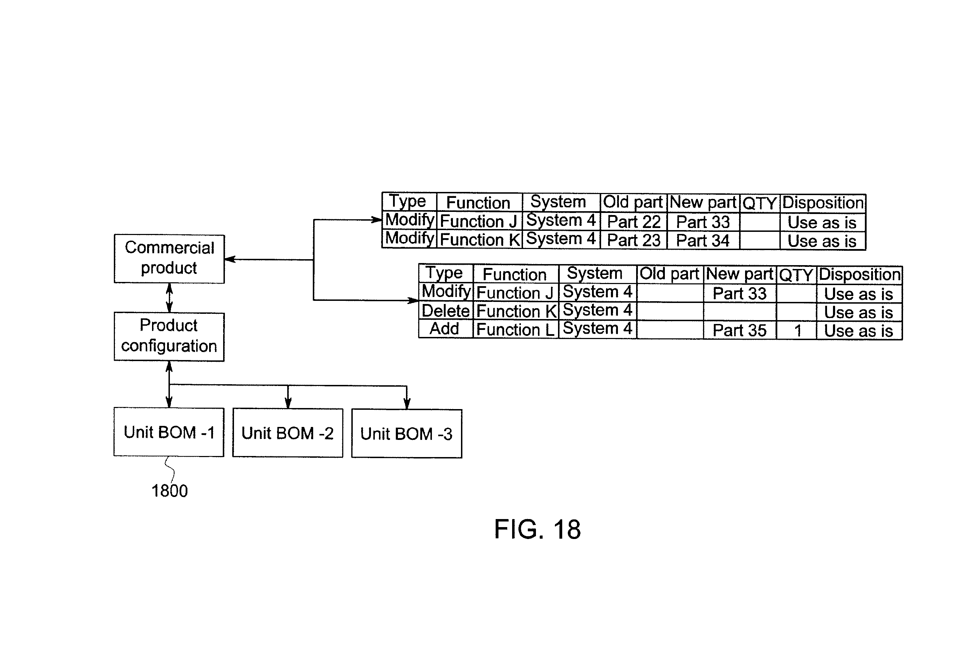

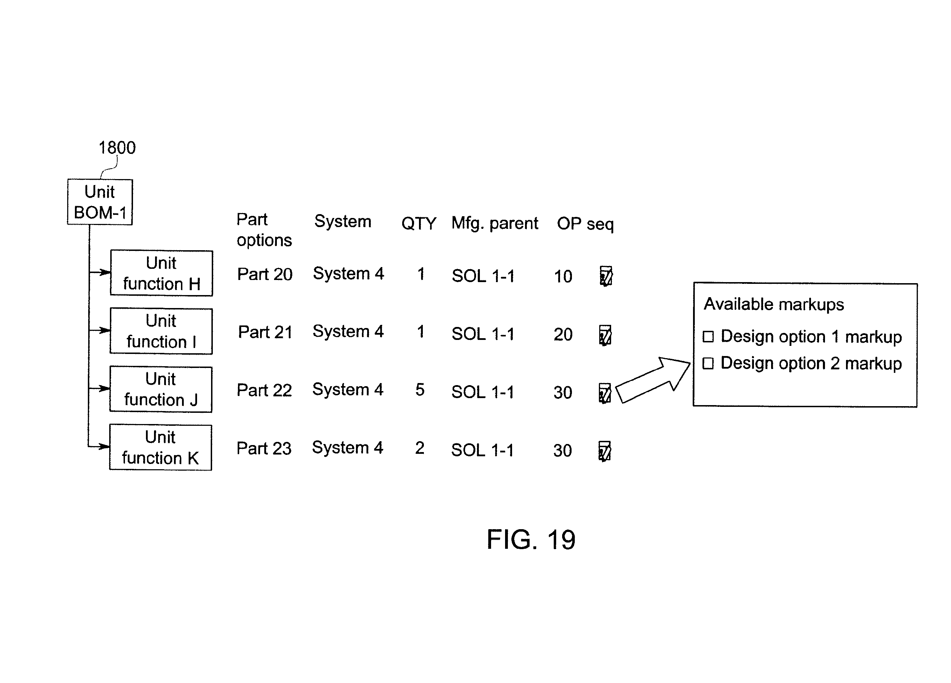

Figs. 18 and 19 represent features for associating markups to products;

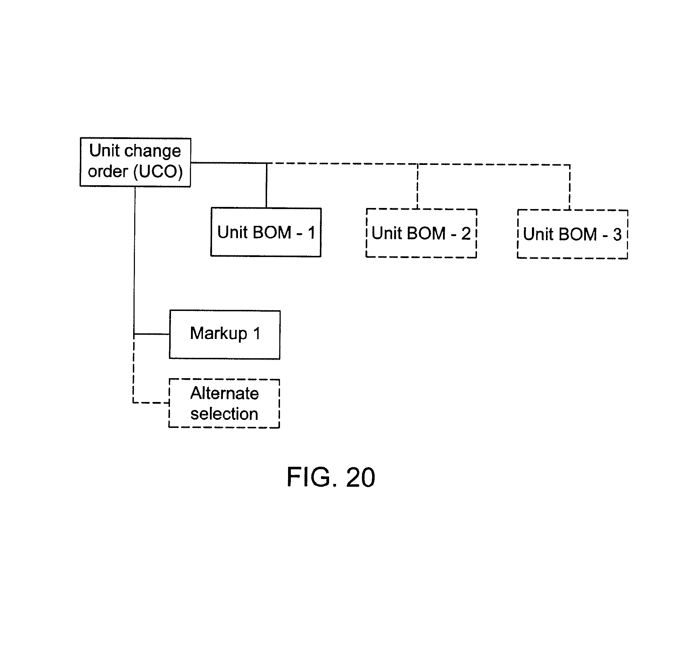

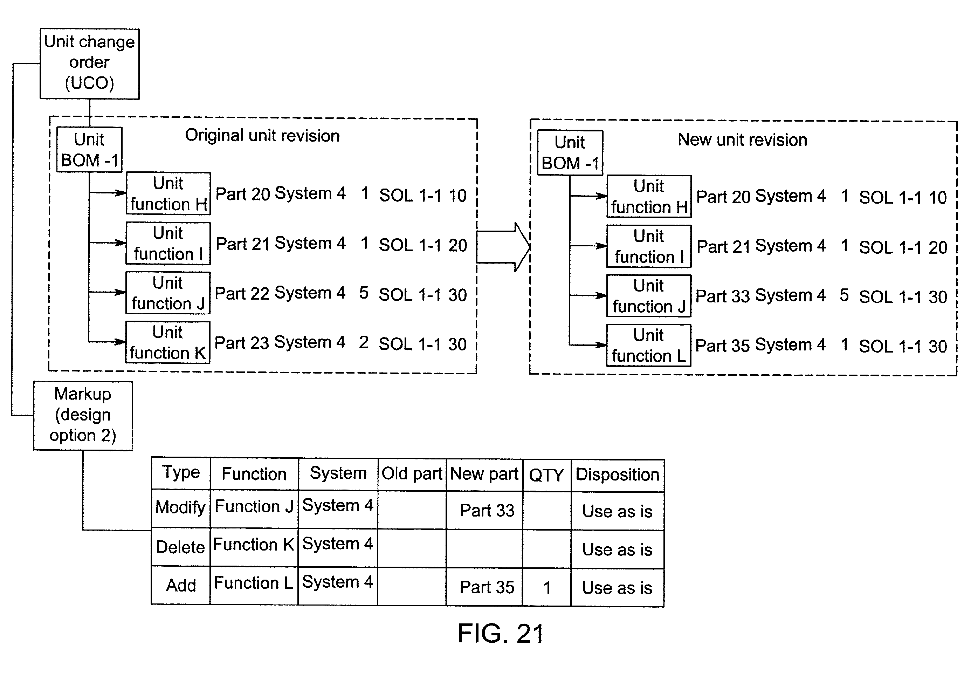

Figs. 20 and 21 represent features for creating a change object automatically based on the selection of a Product BOM Markup;

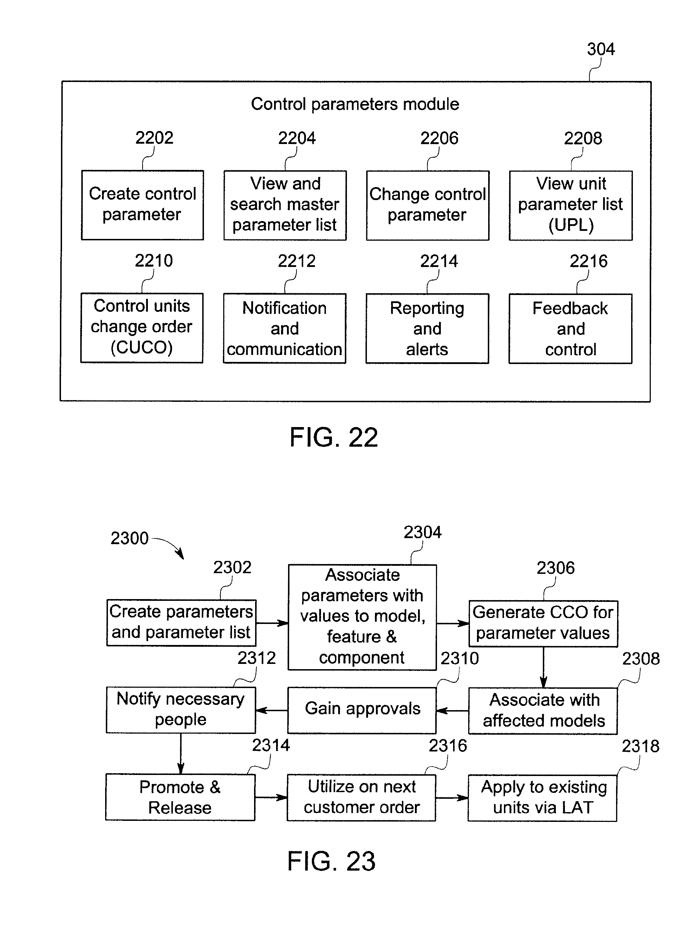

Fig. 22 is a block diagram of an exemplary control parameters software module;
Fig. 23 is a flow chart of exemplary steps in a method of managing parameter digitization and application;

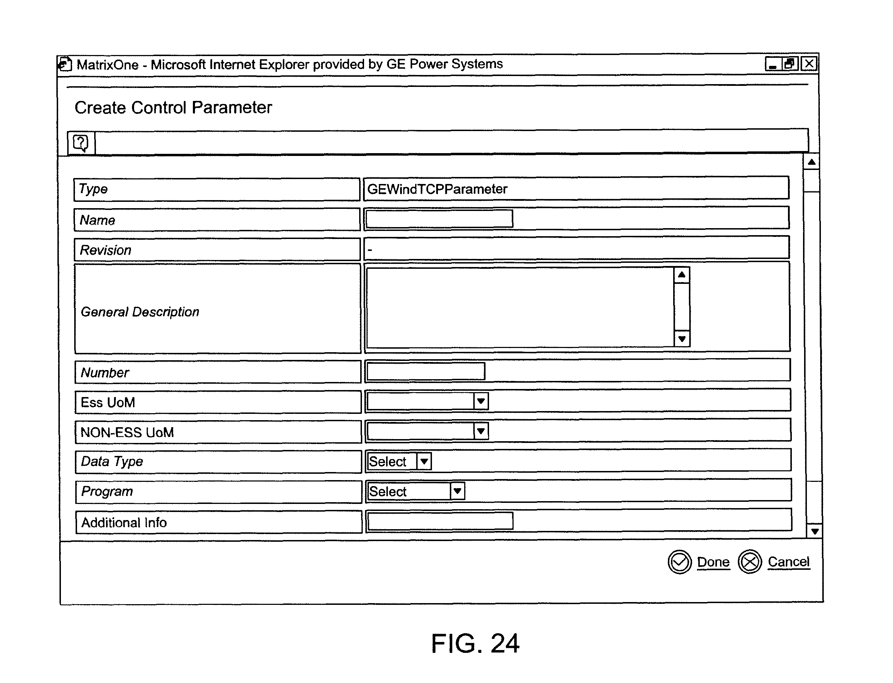

Fig. 24 illustrates an exemplary graphical user interface for use in creating a control parameter within a control parameters software module;

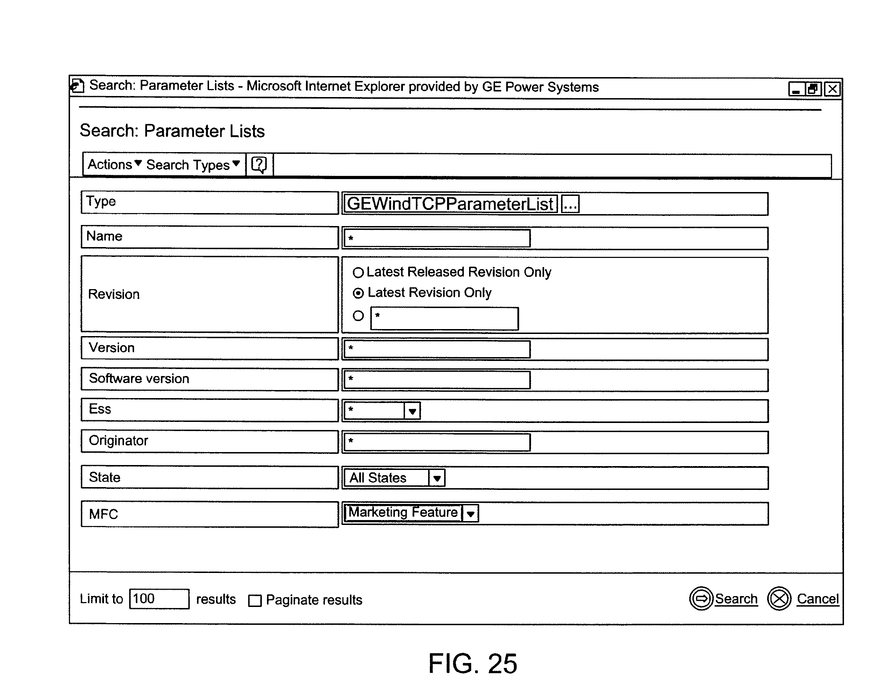

Fig. 25 illustrates an exemplary graphical user interface for use in viewing and searching a master parameter list within a control parameters software module;

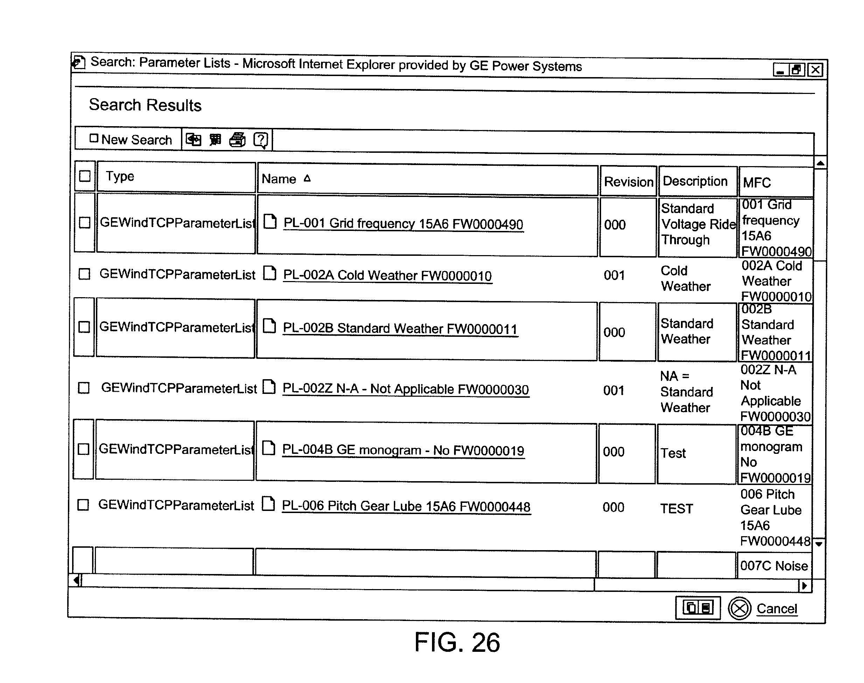

Fig. 26 illustrates an exemplary graphical user interface provided as a result of searching a master parameter list as part of a control parameters software module;

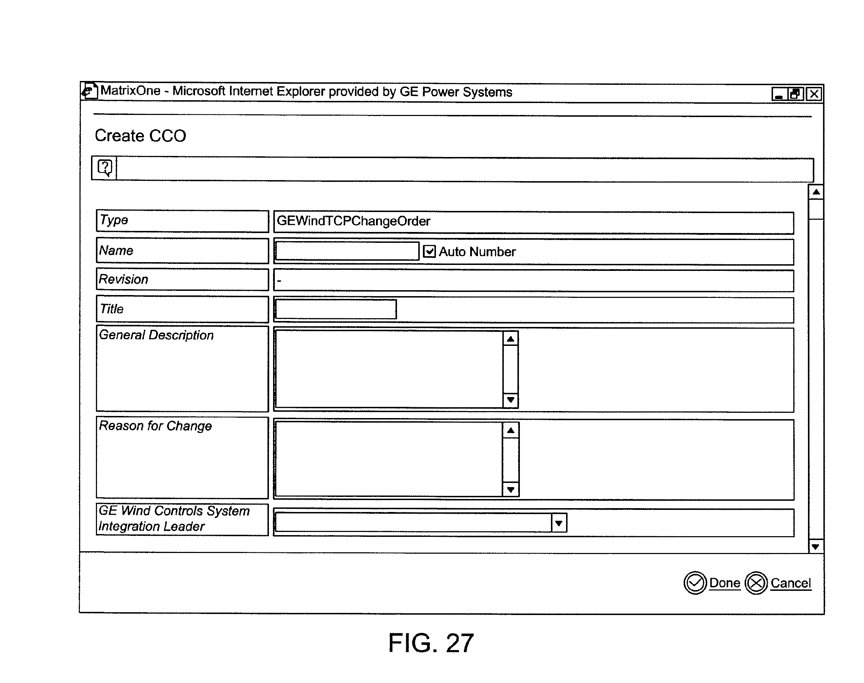

Fig. 27 illustrates an exemplary graphical user interface for use in creating a control parameter change order within a control parameter software module;

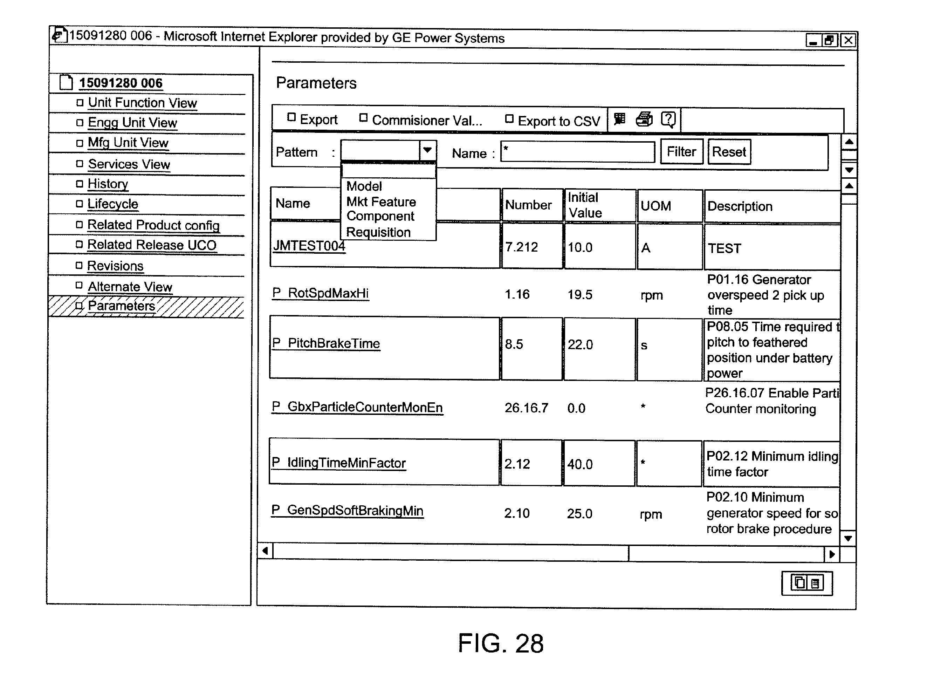

Fig. 28 illustrates an exemplary graphical user interface for use in viewing a unit parameter list (UPL) within a control parameters software module;

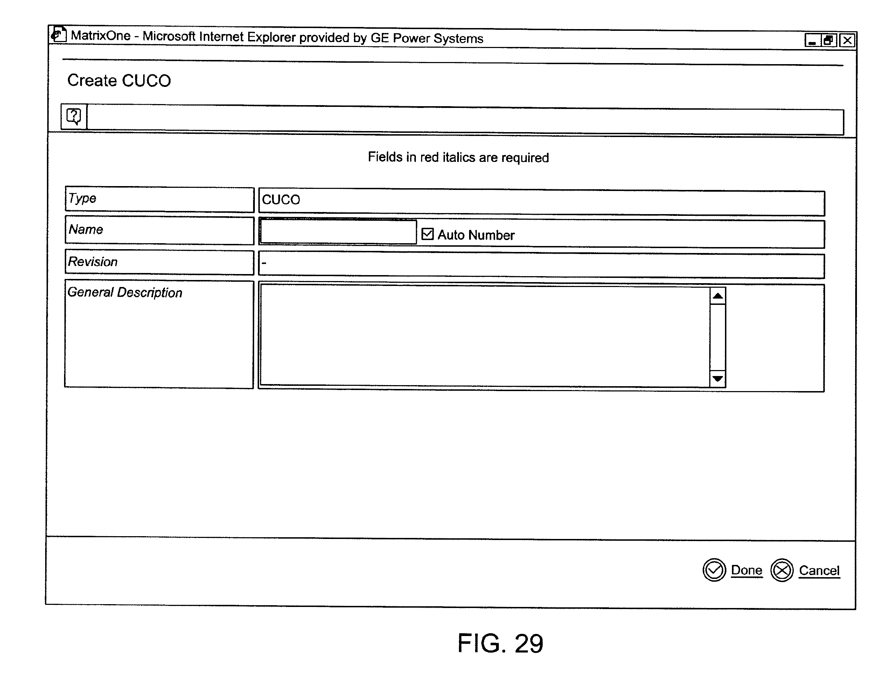

Fig. 29 illustrates an exemplary graphical user interface for use in creating a UPL control units change order (CUCO) within a control parameters software module;

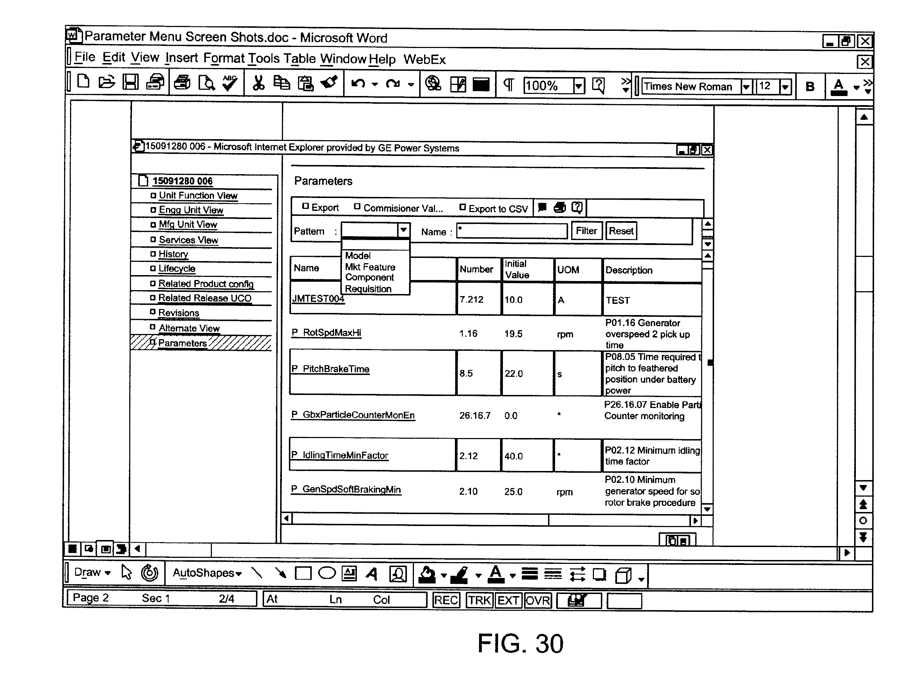

Fig. 30 illustrates an exemplary graphical user interface for providing notification and communication within a control parameters software module;

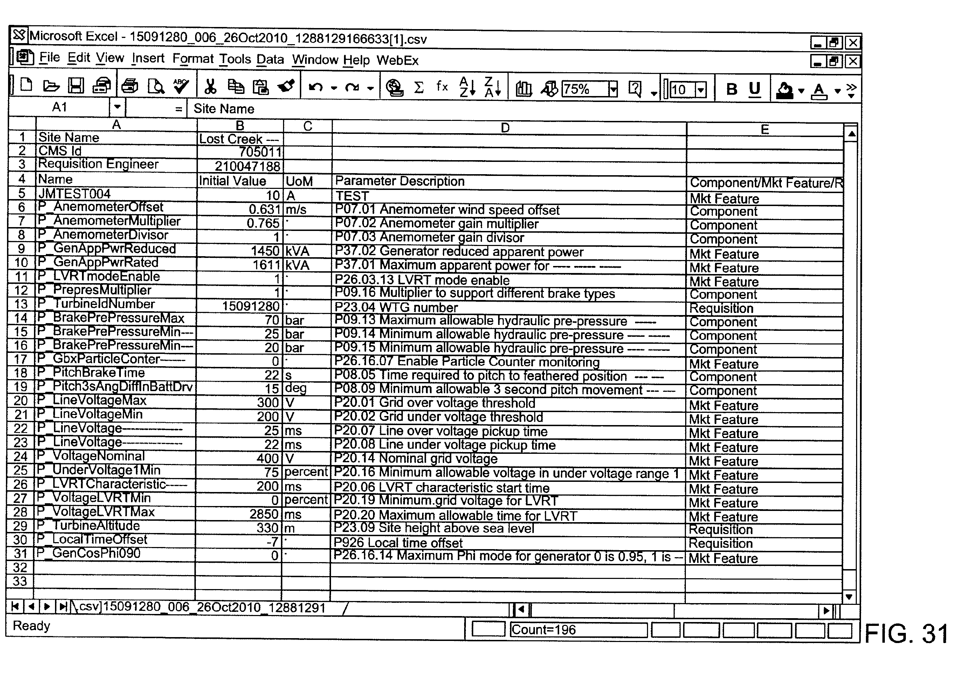

Fig. 31 illustrates an exemplary graphical user interface illustrating a commissioners validation report in accordance with a reporting feature within a control parameters software module;

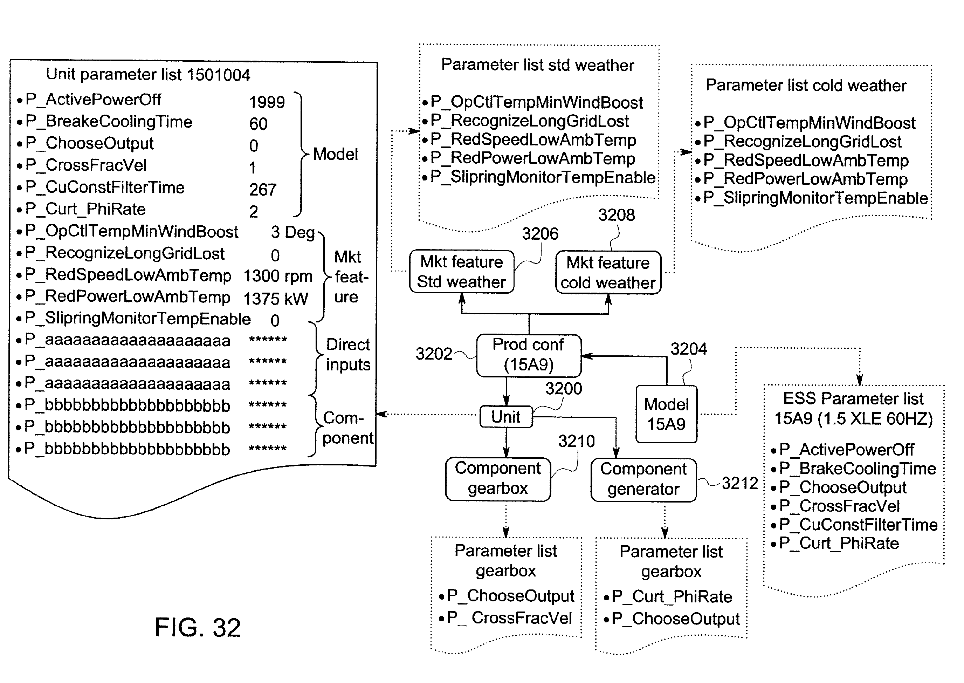

Fig. 32 illustrates aspects of digitized parameter fulfillment in accordance with a control parameter system and method of the present technology; and

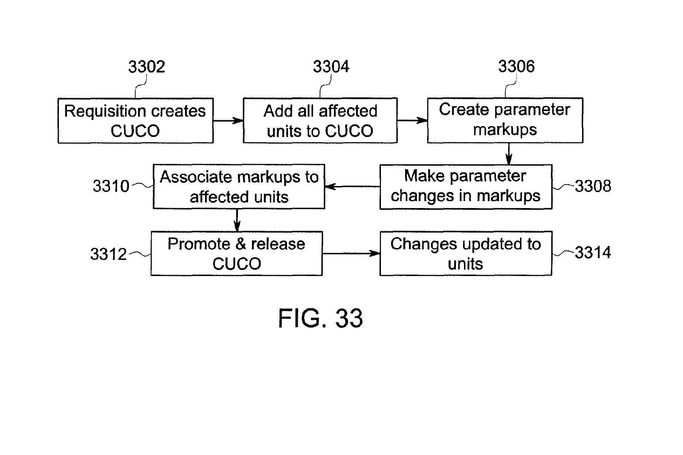

Fig. 33 illustrates a flow chart of exemplary steps in a method of implementing a control units change order (CUCO).

Reference is now made to particular embodiments of the invention, one or more examples of which are illustrated in the drawings. Each embodiment is presented by way of explanation of aspects of the invention, and should not be taken as a limitation of the invention. For example, features illustrated or described with respect to one embodiment may be used with another embodiment to yield a still further embodiment. It is intended that the present invention include these and other modifications or variations made to the embodiments described herein.

The presently disclosed technology generally concerns different features an aspects of a centralized product definition & management systems. Many examples herein describe such features in the context of a Product Lifecycle Management (PLM) application, although it should be appreciated that selected features and steps disclosed herein may be more broadly applicable to any type of electronic system in which product definition and management features are employed.

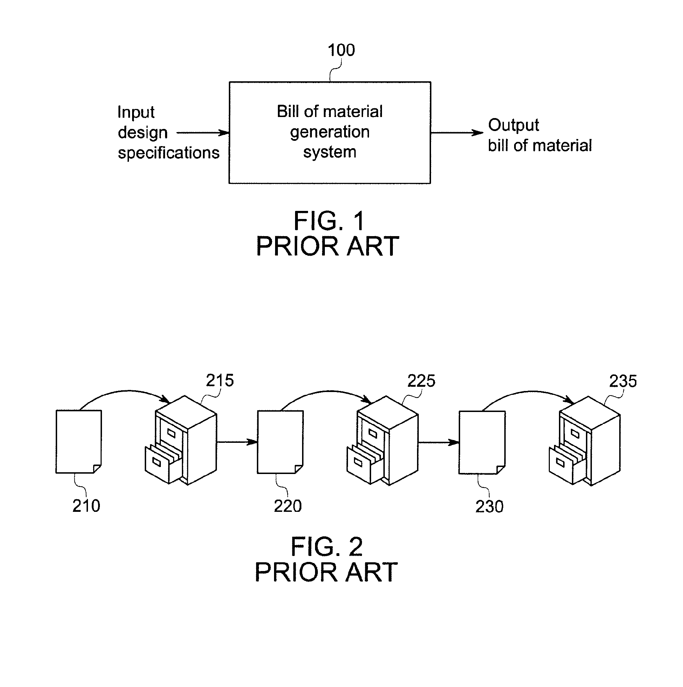

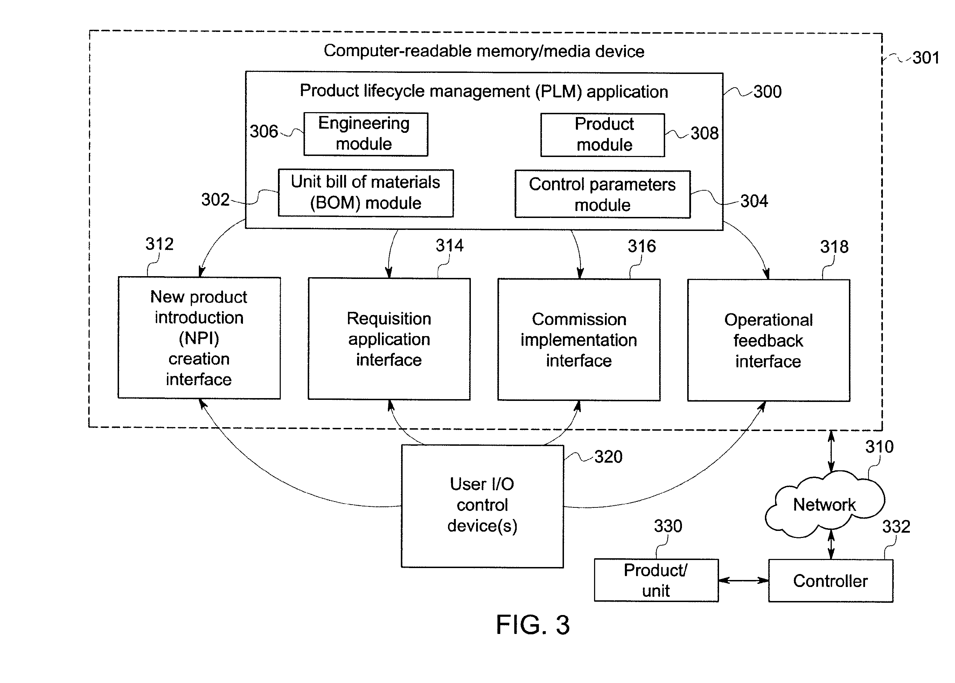

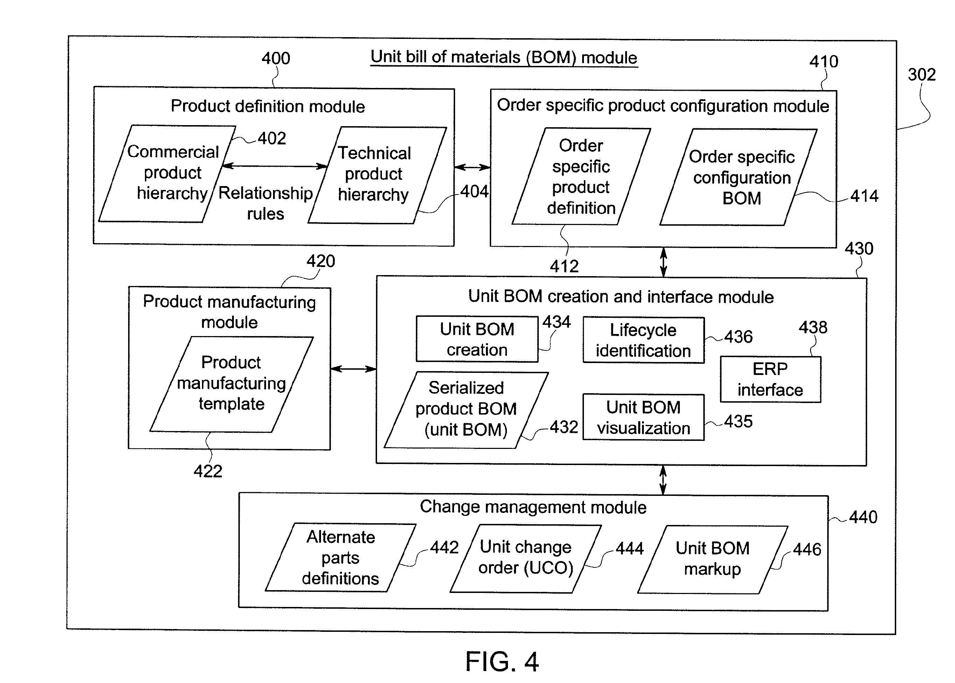

In general, Figs. 1 and 2 illustrate various aspects of prior art technology for use in product and parameter management features. Fig. 3 illustrates a high-level block diagram of a product lifecycle management (PLM) application, including bill-of-material generation and management features as well as control parameter management features associated with various products. Figs. 4-21, respectively, illustrate various aspects associated with a bill-of-materials software module in accordance with the disclosed technology. Figs. 22-33, respectively, illustrate various aspects associated with a control parameter software module in accordance with the disclosed technology. It should be further appreciated that the control parameter software module may be used for defining, managing and applying control parameters as well as any other non-physical components of a product whether generally implemented for a type of product or specifically implemented for specific serialized instances of a product.

Referring first to Fig. 1, a high level block diagram of a prior art bill-of-material generation system is disclosed. In such system, a system user supplies design specifications to a bill-of-material generation system identified at block 100. Output from the present bill-of-material generation system, as shown in Fig. 1, comprises an indented list of parts, i.e. a bill-of-material. A primary advantage of such prior art bill-of-material generation system is the automatic generation of a bill-of-material from design specifications alone, and automatic configuration of product assemblies. Such system generally utilizes assembly model tables and selection criteria tables comprising rules and assembly data to automatically generate the bill-of-material. Additional details concerning the operation of a prior art bill-of-material generation system such as shown in Fig. 1 are described in U.S. Patent No. 5,119,307.

The bill-of-material generation system embodiment of Fig. 1 provides several advantages, but leaves room for needed improvements which are addressed by the disclosed technology. In particular, bill-of-material systems such as represented by Fig. 1 are typically concerned only with the generation of a bill-of-material as may be useful for one particular type of entity, such as manufacturing. As such, changes to the bill-of-material for different types of entities within an organization is not contemplated.In addition, once the bill-of-material is created in accordance with various rules and assembly data, there are no subsequent automated features for amending the bill-of-material, managing the bill-of-material throughout the lifecycle of a product, and creating further information associated with the bill-of-material for use across a spectrum of corporate entities, such as manufacturing, engineering, purchasing, services, etc. Conventional bills-of-material are also normally created to include the physical components of a product and do not include any non-physical component parameters such as those implemented in software. In light of these deficiencies, new steps and features are presently disclosed for implementing a bill-of-materials (BOM) software system that provides new and efficient techniques for managing a BOM on numerous levels.

As mentioned above, some aspects of the present technology are concerned with new features associated with generating and managing BOMs for specific products. Other aspects of the present technology are concerned with new features associated with defining and applying digitized control parameters or other non-physical components for a product. Although such features associated with bill-of-materials and control parameters may be implemented in separate and distinct embodiments, some non-limiting embodiments of the invention combine features for management of both product features - i.e., bills-of-material and control parameters in the context of a single comprehensive software application referred to herein as a product lifecycle management (PLM) application 300 as depicted in Fig. 3. The specific component of PLM application 300 that addresses unit BOMs and related BOM management are represented as a specific software module within PLM 300, namely unit bill-of-materials (BOM) module 302. The specific component of PLM application 302 that addresses control parameters is represented as control parameters module 304. Other non-limiting examples of modular portions within a PLM application 300 include an engineering module 306 and a product module 308. The operation of engineering and product modules 306 and 308 or other conventional software features of a PLM application are known and understood by those of ordinary skill in the art.

Referring now to Fig. 3, a primary physical component of a system for implementing aspects of the disclosed technology corresponds to a software package including a product lifecycle management (PLM) application 300. The PLM application 300 is a software-based module comprising a set of computer-readable and executable instructions that are stored on a tangible computer-readable medium such as represented by memory/media device 301. The memory/media device 301 may include the software instructions configured to implement the program features and steps of PLM application 300 and/or product data and other information that is accessed by the software instructions. Memory/media device 301 may be provided as a single or multiple portions of one or more varieties of tangible, non-transitory computer-readable media, such as but not limited to any combination of volatile memory (e.g., random access memory (RAM, such as DRAM, SRAM, etc.) and nonvolatile memory (e.g., ROM, flash, hard drives, magnetic tapes, CD-ROM, DVD-ROM, etc.) or any other memory devices including diskettes, drives, other magnetic-based storage media, optical storage media, solid state storage media and others. When software is used, any suitable programming, scripting, or other type of language or combinations of languages may be used to implement the teachings contained herein. It should be appreciated that other embodiments of the present technology may implement the presently disclosed features in alternative ways, such as by hardwired logic or other circuitry, including, but not limited to application-specific circuits.

The PLM application 300 may be stored in a variety of computer-accessible media locations, for example on one or more dedicated serversor combinations of networked computers or networked storage devices. In some embodiments, the storage location of PLM application 300 is accessible from other computers via network 310. In some embodiments, other computers (not shown) connected to the network 310 locally store a copy of PLM application 300, but selected data accessed by such application is stored in a central or distributed network-accessible location.

When access to the software features of PLM application 300 is obtained remotely, such remote connection may be established directly or indirectly via one or more wired or wireless connections to the memory/media device 301 hosting the PLM application 300. Remote computers may be coupled via network 310, which may correspond to any type of network, including but not limited to a dial-in network, a utility network, public switched telephone network (PSTN), a local area network (LAN), wide area network (WAN), local area network (LAN), wide area network (WAN), metropolitan area network (MAN), personal area network (PAN), virtual private network (VPN), campus area network (CAN), storage area network (SAN), the Internet, intranet or ethernet type networks, combinations of two or more of these types of networks or others, implemented with any variety of network topologies in a combination of one or more wired and/or wireless communication links.

Computers that access the subject PLM software application 300 or selected features thereof may respectively include one or more communication interfaces, one or more memory/media devices, and one or more processing devices such as a microprocessor or the like. Such computing/processing device(s) thus may be adapted to operate as a special-purpose machine by executing the software instructions rendered as part of PLM application 300. The software instructions stored in memory/media device 301 may also define a plurality of different interfaces for accessing the PLM application 300, thus interfacing the PLM application 300 for different corporate entities associated with product management. For example, Fig. 3 illustrates exemplary software interfaces in the form of new product introduction (NPI) interface 312, requisition application interface 314, commission implementation interface 316 and operational feedback interface 318. In this way, different types of access to PLM application 300 can be customized for different corporate entities based on different needs of a product lifecycle (e.g., product creation, requisition, implementation and operation).

System users may be provided with access to the PLM application and/or selected software features thereof via one or more user I/O control devices 320 as also shown in Fig. 3. Exemplary input device(s) may include but are not limited to a keyboard, touch-screen monitor, eye tracker, microphone, mouse and the like. Exemplary output device may include but are not limited to monitors, printers or other devices for visually depicting output data created in accordance with the disclosed technology. Other I/O devices correspond to intermediate computer components such as memories or processors accessing PLM application 300. The term "system user" as used herein refers to a human operator, another computer, or a combination human-computer operator. It should be understood, therefore, that the term "system user" is not limited to meaning a human operator.

Additional communication with PLM application 300 or selected modular features thereof may be provided to an actual product or unit that is being managed in accordance with the PLM software. Communication with PLM application 300 may also occur with a network 310 such as represented in Fig. 3. In many instances, the product or unit 330 is interfaced to the network 310 via a controller 332. Controller 332 may include a computerized control system electrically linked to each component or part of the product/unit 330 and capable of controlling any mechanisms that control operation of each part or component.

The particular types of products that may be managed in accordance with the disclosed technology may correspond to a variety of different types of products, assemblies, processes or even computer software. In some particular examples, the disclosed technology may be used with a PLM application for managing power generation and related energy components, such as but not limited to wind turbine generators (WTGs), gas turbines, steam turbines, solar power assemblies and the like. It should be appreciated that when the disclosed technology is employed particularly for generator products such as WTGs, the unit BOM software module 302 is configured to generate and maintain a bill-of-materials for a specific serialized instance of a WTG or the like. Likewise, the control parameters module 304 is configured to electronically define, apply and manage a tailored control system of software and control parameters or other non-physical components for a WTG or the like.

Referring now to Fig. 4, a unit BOM software module 302 generally is configured to generate and maintain a bill-of-materials for a specific serialized instance of a product that is based on a list of functions, and information associated with each function that allows the multiple views of a bill-of-materials (BOM) depending on the needs of the consumer of the BOM. This method facilitates a dynamic system for designing and building a product anywhere at any time by allowing for a common engineering parts list to be transformed into a specialized view or a BOM that reflects a product for specific customer needs, uses or locations of use through pre-established mapping between part functions and manufacturing BOM structures.

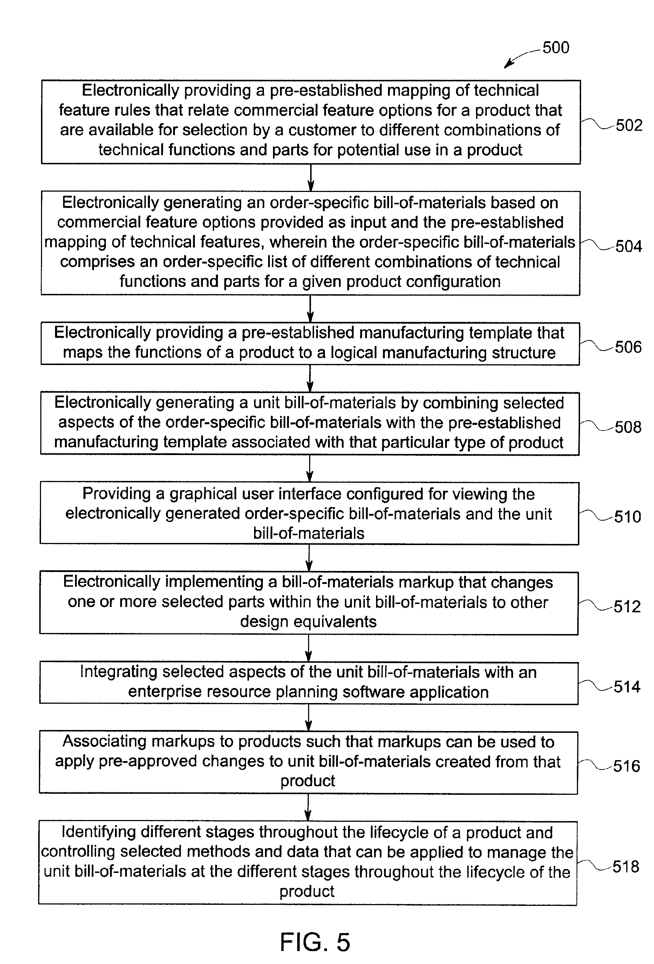

Unit bill-of-materials (BOM) software module 302 in accordance with the presently disclosed technology may include one or more of a variety of respective software components, including the various modules represented in Fig. 4 as a product definition module 400, an order-specific configuration module 410, a product manufacturing module 420, a unit BOM creation and interface module 430 and a change management module 440. The different functional modules depicted in the system view of Fig. 4 are responsible for implementing various exemplary steps associated with a method of generating and managing a unit bill-of-materials, an example of which is illustrated in Fig. 5. It should be appreciated that different combinations of the modular features depicted in Fig. 4 and/or the functional steps depicted in Fig. 5 may be practiced in accordance with embodiments of the disclosed technology. The correlation between functional software modules within the Unit BOM software system 302 of Fig. 4 and the various steps performed by the method 500 depicted in Fig. 5 are now presented.

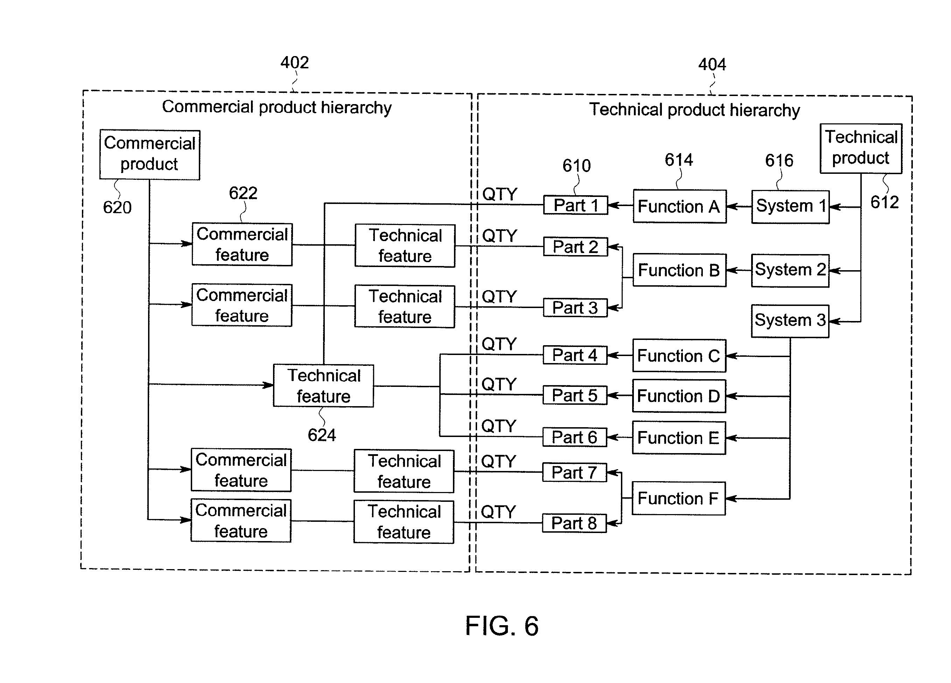

Referring still to Figs. 4 and 5, a first step 502 in method 500 corresponds to electronically providing a pre-established mapping of technical feature rules that relate commercial feature options for a product that are available for selection by a customer to different combinations of technical functions and parts for potential use in a product. Step 502 generally may be implemented by the product definition module 400 provided within the Unit BOM software module 302. Within the product definition module 400, several data structures are created, including a commercial product hierarchy data structure 402 and a technical product hierarchy data structure 404 which are interfaced by pre-established relationship rules. Additional aspects of such data structures can be realized from Fig. 6.

Referring now to Fig. 6, a technical product hierarchy data structure 404 generally defines the engineering structure information for a product as a collection of functions (descriptive components) in a logical hierarchy. The classification hierarchy within the technical product hierarchy data structure 404 ultimately classifies all possible parts 610 for a technical product 612. Still further, the classification breaks a technical product 612 down to unique functions 614 within the product. Functions generally correspond to a particular component within a product, and may correspond to either a single part, i.e., a "piece part," or an inseparable assembly of multiple parts. Each function 614 has a unique usage and it is possible that multiple parts 610 can satisfy the same function. Functions are typically defined to be unique for each system 616, yet another possible category within the technical product hierarchy data structure 404. It should be appreciated that while the diagram illustrated in Fig. 6 displays the technical product hierarchy as multi-level, the actual data is typically stored as a list of function and part combinations with associated attributes that describe the system, quantity, and other bill-of-materials (BOM) data.

With further reference to Fig. 6, a commercial product hierarchy data structure 402 generally defines the commercial options and relationship rules between the product features and the function/part combinations for a configurable product. A commercial product definition 620contains all commercial features 622 selectable by the customer during design of a specific unit order. Commercial features 622 are selectable options that are available for selection by a customer of a Configure-to-Order or Engineer-to Order product. Technical features624 are then used in connection between the commercial product hierarchy data structure 402 and the technical product hierarchy data structure 404 to enable the configuration of order-specific units. Within the commercial product data structure 402, configuration rules are maintained which logically determine which technical features 624 and/or which function/part combinations 610/614 are selected when a product is configured.

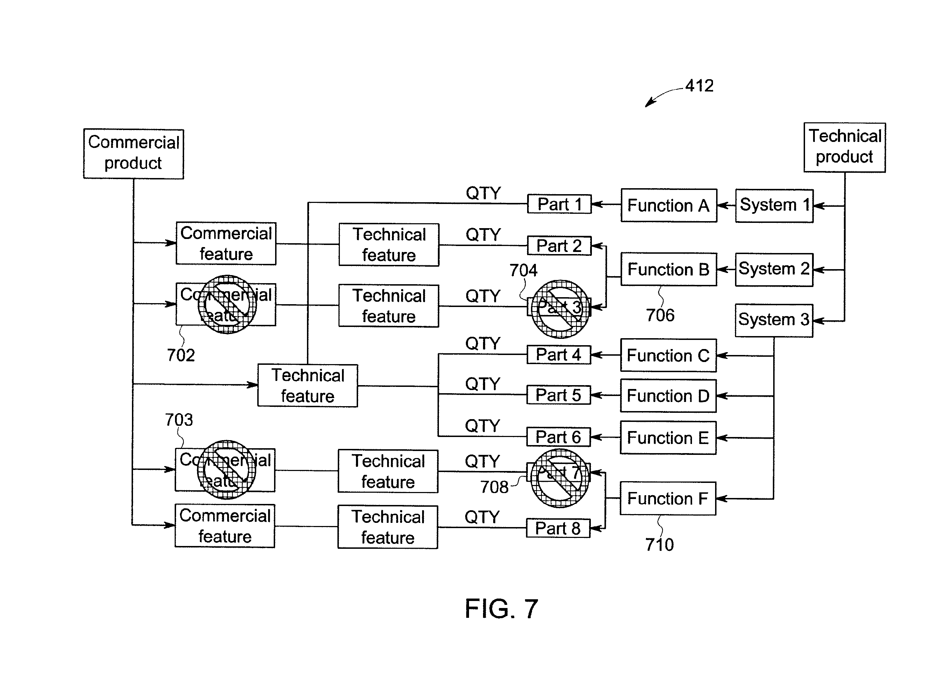

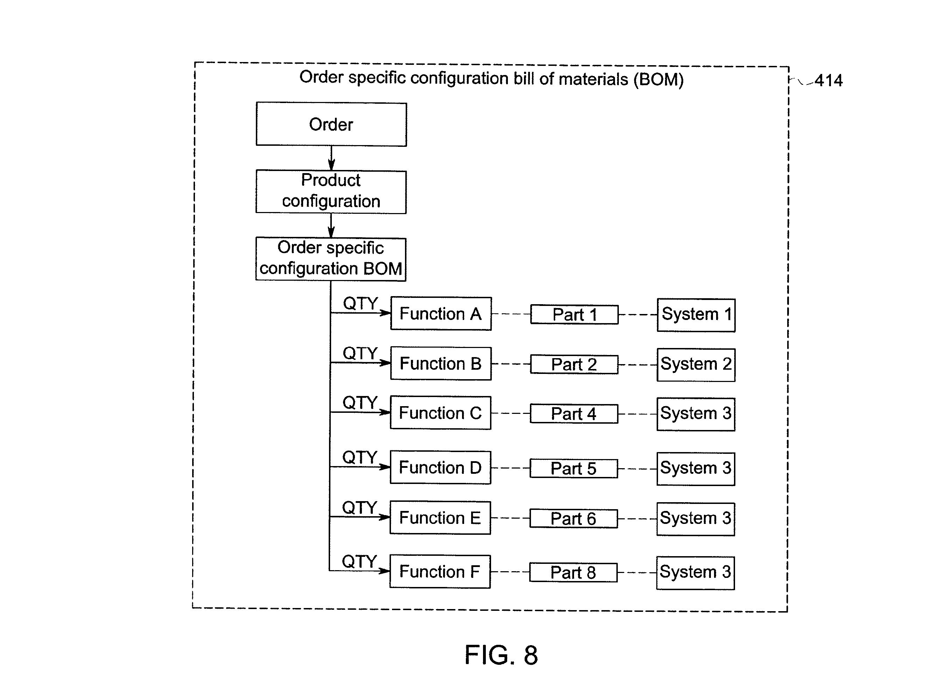

Referring again to Figs. 4 and 5, a next step 504 in the present method 500 concerns electronically generating an order-specific bill-of-materials based on commercial feature options provided as input and the pre-established mapping of technical features. Step 504 generally may be implemented by the order-specific product configuration module 410 within the Unit BOM software module 302. Module 410 generally corresponds to a product configurator that creates an order-specific product configuration bill-of-material (BOM) 414 which is a list of function-part combinations for a product based on the customer feature selections and rules established within the configurator as part of the order-specific product definition 412. Examples of the data structures 412 and 414 created within module 410 as part of step 504 may include an order-specific product definition 412 such as illustrated in Fig. 7 and/or an order-specific configuration bill-of-materials (BOM) 414 such as illustrated in Fig. 8.

In Fig. 7, an exemplary order-specific product definition data structure 412 for use within a bill-of-materials software module is used to establish product definitions and relationships between a specifically ordered commercial product and technical product. The order-specific product definition data structure 412 is derived from the product definition data structures established in product definition module 400. However, data structure 412 is created as a customized product configuration which specifies the selected commercial features chosen as part of a unit order. Based on those selected commercial features, the previously established rule relationships between commercial features and technical features are used to identify which function/part combinations are relevant for the unit. For example, if a customer orders a product unit containing all commercial features except for commercial features 702 and 703 shown in Fig. 7, then the pre-established mapping and relationship rules within the subject system can identify which parts are not needed, such as Part 3 (704) within Function B (706) and Part 7 (708) within Function F (710). From the relevant identification of function/part combinations based on selected commercial features in a customer order, a configuration precise BOM 414 can be established, as depicted in Fig. 8. The order-specific configuration BOM 414 contains a flat list of technical functions and parts that satisfy the order's criteria for a particular product configuration. Logistically speaking, the serialized unit BOM creation process typically starts after a product configuration has been accepted by the customer.

Referring again to Figs. 4 and 5, a next step 506 in the present method 500 concerns electronically providing a pre-established manufacturing template that maps the functions of a product to a logical manufacturing structure. Step 506 generally may be implemented by the product manufacturing module 420 within the Unit BOM software module 302. The product manufacturing template 422 provided within module 420generally provides the information for creating a manufacturing plant specific BOM. A manufacturing plant specific BOM can be especially useful for access by an enterprise resource planning (ERP) software application. ERP software applications may be interfaced with a PLM software application or other product management application in some embodiments of the disclosed technology.

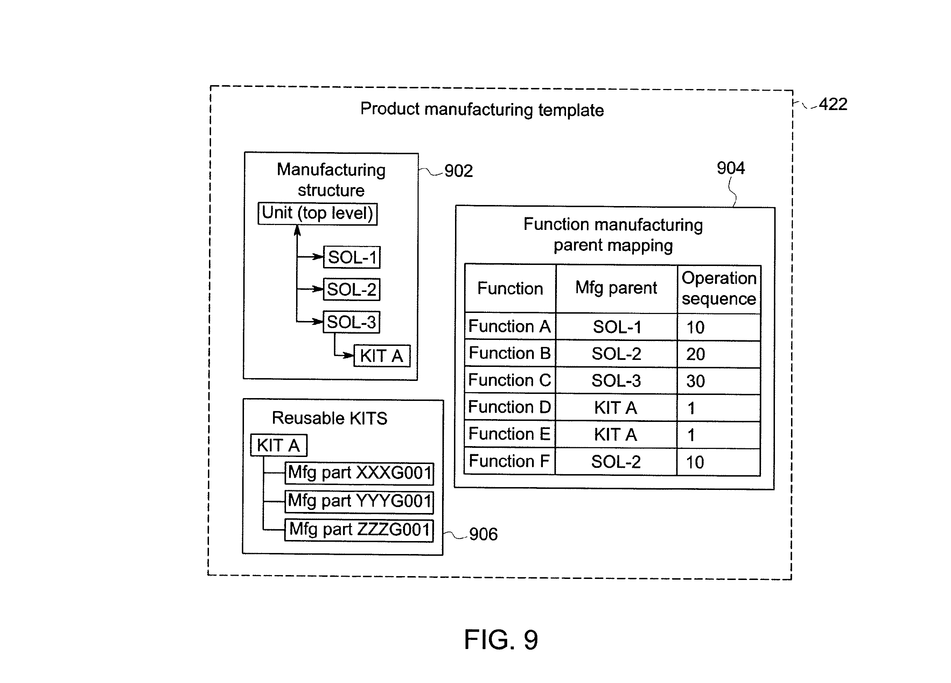

Referring now to Fig. 9, it will be appreciated that each product manufacturing template 422 maps the functions of a product to a logical manufacturing structure. Manufacturing templates are normally product and manufacturing plant specific, allowing for multiple manufacturing BOMs for a product. In some embodiments, a product manufacturing template comprises one or more of three possible data structures, namely a manufacturing data structure 902, a function manufacturing parent mapping data structure 904 and/or a resusable kit data structure. Manufacturing data structure 902 provides a generic manufacturing parts hierarchy that defines the relationship among different manufacturing parent parts. Function manufacturing data structure 904 provides a mapping between functions and manufacturing parent parts. Reusable kit data structure 906 provides a definition of any re-usable manufacturing assemblies (i.e., kits) that may be used during manufacturing at a particular location. In the context of a product manufacturing template, changes to parts for a function do not require a change in the template so long as the BOM mapping of functions to parts remains the same.

Referring again to Figs. 4 and 5, a next step 508 in the present method 500 concerns electronically generating a unit bill-of-materials 432 by combining selected aspects of the order-specific bill-of-materials 414 with the pre-established manufacturing template 422 associated with that particular type of product. Step 508 generally may be implemented by the unit BOM creation and interface module 430 which ultimately produces the data structure corresponding to a serialized product bill-of-materials (or unit BOM) 432.

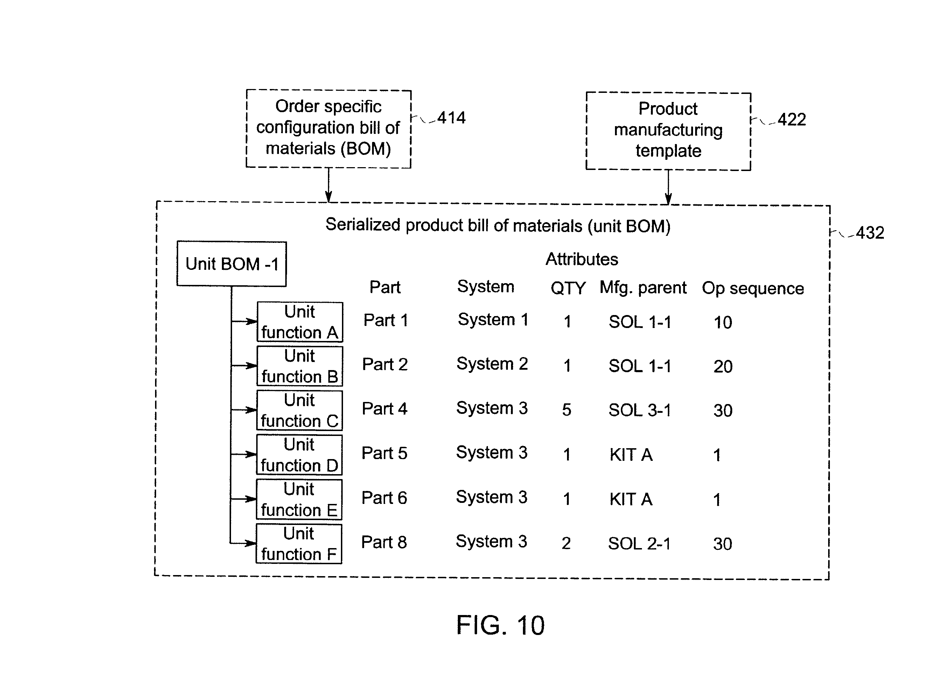

An example of a unit BOM 432 is illustrated in Fig. 10. The serialized product BOM (unit BOM) creation process creates a unique unit BOM(s) 432 by combining selected information in the order-specific configuration BOM 414 and the product manufacturing template 422, along with unit quantity, serial number, and other information that is maintained with a general product configuration. In some embodiments, the unit BOM creation module 430 is further capable of creating individual manufacturing assembly BOMs within a unit based on the templates associated with the manufacturing assemblies during BOM creation. The unit BOM 432 consists of a collection of "Unit Functions" which contain attribute information from the configuration BOM 414 and the product manufacturing template 422. In the exemplary embodiment shown in Fig. 10, unit BOM 432 is a flat list of "Unit Functions," and has no structure."Unit Functions" are functions created specifically for this particular serialized product which can contain information about the physical parts used in that unit.

As an additional part of the unit BOM creation and interface module 430, a unit BOM visualization software feature 435 provides for multiple views of a unit BOM based on the attribute information provided in the unit functions of the unit BOM. In general, it should be appreciated that many types of graphical user interfaces may be provided that are configured for viewing such data structures as the electronically generated order-specific bill-of-materials and the electronically generated unit bill-of-materials. Such step of providing a graphical user interface is represented in Fig. 5 as step 510. The types of graphical user interfaces provided to a user may correspond to any of the data structures illustrated herein or as may otherwise be appreciated in light of the present disclosure.

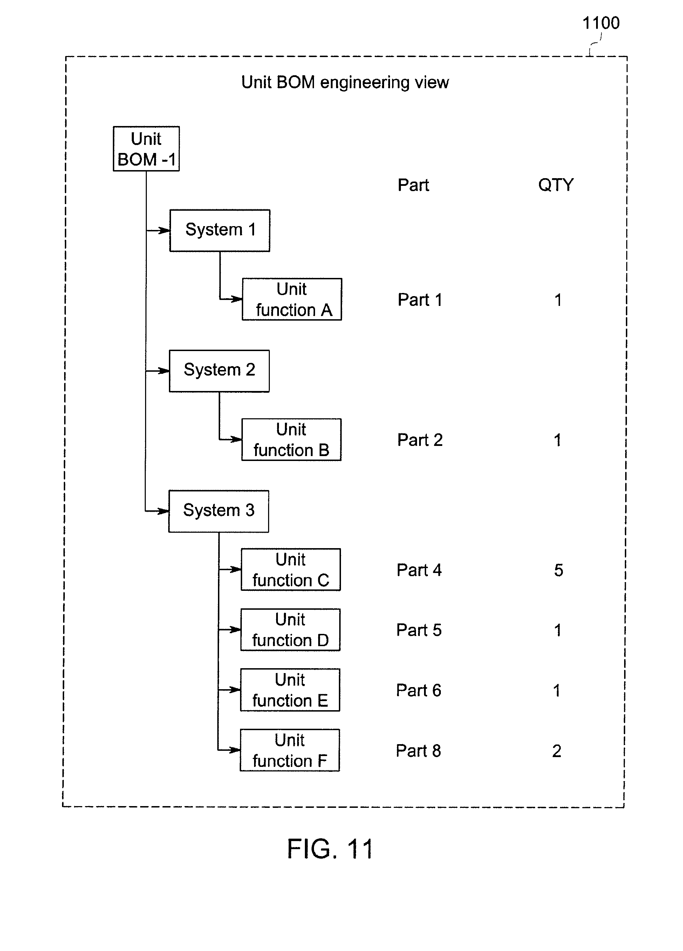

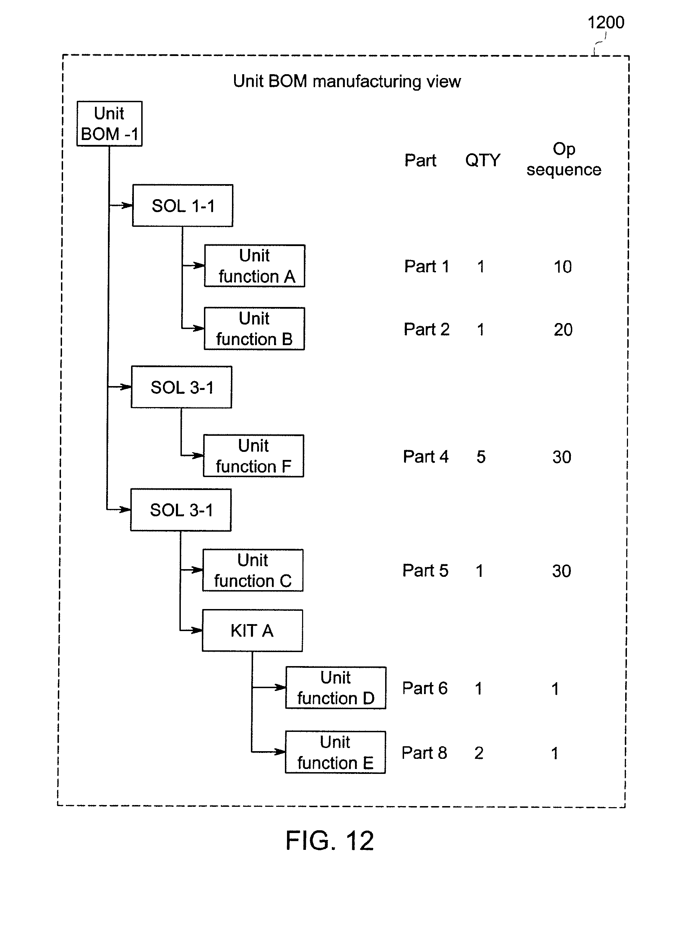

It should be further appreciated that selected data structures may be available in different types of views depending on the consumer of the BOM. For example,Fig. 11 illustrates a first exemplary unit BOM visualization, namely a unit BOM engineering view 1100 for display to a user of the subject application. In the unit BOM engineering view 1100, a BOM can be displayed based on unit function data as outlined in the technical product hierarchy data structure 404. In another visualization example, Fig. 12 illustrates a unit BOM manufacturing view 1200 for display to a user of the subject application. The manufacturing view 1200 displays selected BOM attributes based on the data from the manufacturing template. Additional templates could also be used to create additional views for other system users beyond the manufacturing and engineering contexts.

Another additional optional component of a unit BOM creation and interface module 430 corresponds to a lifecycle identification module 436. Lifecycle identification module 436 may be responsible for implementing an optional step 518 of identifying different stages throughout the lifecycle of a unit (a specific instance of a product) and controlling selected methods and data that can be applied to manage the unit bill-of-materials at the different stages throughout the lifecycle of the unit. Such lifecycle states associated with a unit BOM identify the status of the BOM. Exemplary lifecycle states for a unit in one embodiment include a planning state, a manufacturing state, a shipping state, an installation state, a running or operational state (including optional distinct states for whether a unit is running in warranty or running out of warranty.) The lifecycle states can be used to control the methods and data that can be applied to manage a BOM while a unit is in a given state. The product lifecycle status can be modified to reflect specific business process or tracking statuses.

Another additional optional component of a unit BOM creation and interface module 430 corresponds to an ERP interface module 438. ERP interface module 438 may be responsible for implementing an optional step 514 of integrating selected aspects of the unit bill-of-materials with an enterprise resource planning (ERP) software application. Using the data from the "Manufacturing View" of a unit BOM, the necessary data to create the part and part-part (BOM) information can be created to interface with ERP system(s) which may be used to procure and manufacture a unit.

Referring again to Figs. 4 and 5, an additional component within the unit BOM module 302 may correspond to a change management module 440. Change management module 440 may be responsible for generating multiple types of data structures involving markups and changes to various product definition and BOM data structures, namely an alternate parts definition data structure 442, a unit change order (UCO) 444 and a unit BOM markup 446. Change management module 440 may be responsible for implementing additional optional steps included in some embodiments of the disclosed technology, including but not limited to a step 512 of electronically implementing a bill-of-materials markup that changes one or more selected parts within the unit bill-of-materials to other design equivalents and a step 516 of associating markups to products such that markups can be used to apply pre-approved changes to unit bill-of-materials created from that product.

More particular aspects of the change management module 440 are illustrated in Figs. 13-21. Referring first to Figs. 13 and 14, such figures illustrate features for identifying that a part is an alternate for another part, and for providing the ability to view these alternate parts in the context of a Unit BOM. Such features may be provided as part of the alternate parts definitions module 442 illustrated in Fig. 4. Fig. 13 shows an exemplary technical product hierarchy data structure before alternate parts are defmed. In such example, part 4 is used to satisfy multiple functions in a technical product (namely Function C and Function G) and is the default part to be used based on its connection to the Commercial Product. Fig. 14 shows an exemplary technical product hierarchy data structure after alternate parts are defined. More particularly, when part 10 is created, it is established as an alternate by indicating that part 10 replaces part 4. When this is done, part 10 can be used in any function that part 4 was previously used. This indicates complete interchangeability of such parts.

Figs. 15 and 16 illustrate various features associated with creating a unit change order (UCO) automatically based on the selection of an alternate part which records the unit BOM and the alternate selection.Fig. 15 illustrates how a UCO 444 records unit BOMs as well as alternate part selections. Multiple units and multiple alternates can be associated with a UCO 444. Once such information is established, additional steps are implemented for applying changes in the form of a Unit Change Order (UCO) which relates the unit(s) to be changed and the changes, and allows for a workflow process of revising and applying the changes to be executed. This may also include updating ERP systems with net changes asapplicable. Once a UCO is created and released, the creation of a new unit revision 1600 from an original unit revision 1610 including application of the specifically recorded BOM changes is automatically generated. A process flow generally represented by the data structures of Figs. 15 and 16 may include such steps as: (a) selecting the unit(s); (b) selecting the alternate(s); (c) releasing the change (in the form of a UCO); (d) updating a unit; and (e) updating ERP systems, depending on the unit lifecycle state.

Fig. 17 represents features associated with creating a data structure of net changes to a unit BOM, namely in the form of a unit BOM markup 446. Such feature provides an ability to control the change of multiple parts that need to be replaced as a set (i.e., that are not interchangeable on their own.) The traditional process for managing configurable BOMs required that new engineering assemblies were created for systems when a new design was added to a product. Since engineering assemblies may not be recognized by a manufacturing, supply chain, or services, a method is needed to change unit BOMs at a function/part level.As such, a BOM markup is created when the new parts are released for production and made available for new configurations. In Fig. 17, two exemplary BOM markups are depicted as the design option 1 markup 446a and the design option 2 markup 446b. The design option 1 markup 446a is made available when new parts 33 and 34 are made available as alternates for parts 22 and 23. Similarly, design option 2 markup 446b is made available when new parts 33 and 35 are made available as alternates for parts 22 and 23. As shown, the markup is associated with the applicable products for which the change is possible.

Figs. 18 and 19 represent features provided for associating markups to products such that these markups can be used to apply pre-approved changes to unit BOMS created from that product. As depicted in Fig. 18, the unit BOMs 1800 maintain the relationship to the product from which they were configured, and therefore inherit the markups associated to that product. From the unit BOM 1800, the markups which apply to a certain function are available for selection and application to a unit BOM, as shown in Fig. 19. In some embodiments, selected markups can be based on unit lifecycle state.

Figs. 20 and 21 represent features provided for creating a unit change order (UCO) automatically based on the selection of a product BOM markup which records the Unit BOM and the BOM Markup. Similar to the UCO creation described with respect to Figs. 15 and 16, the UCO is used to relate the unit(s) for which amarkup is required. The UCO stores not only associated alternate part selections, but also BOM markups. The procedure for implementing such a UCO as depicted in Figs. 20 and 21 is also similar to that previously described with respect to Figs. 15-16.

Still further features than those illustrated in the figures may be provided within the framework of a unit BOM software module. For example, features may be provided for creating engineering specific markups that allow the changing of unit BOM data that is controlled by engineering, including the addition/removal of parts, and any other changes that are not pre-approved. In another example, features are provided for creating manufacturing specific markups that allow the changing of unit BOM data that is controlled by manufacturing, including the manufacturing structure or manufacturing BOM attribute changes. In still further examples, features may be provided for creating data structure specific markups which allow the changing of unit BOM data that is controlled by the data structure owner, including the structure and attributes owned by that data structure owner. In other examples, features are provided for creating manufacturing assembly BOM quotes within a unit BOM based on the templates associated with each manufacturing assembly during unit BOM creation. In still other examples, features are provided for identifying additional data structures that map functions to alternate structures to provide different views.

The above-described system and method of generating and managing unit bills-of-material offer several advantages. First and foremost, the amount of effort and resources that are required to manage a BOM is significantly reduced. Second, such technology provides a BOM structure that maintains an as-running BOM that can be accessed and managed during all stages of a product lifecycle including during operation. This allows for quick identification of where a part is used in any lifecycle of a serialized product instance. This gives a competitive advantage since a customer knows at any time what is on a unit, thus helping sales and service entities within an organization. Third, bills-of-material are capable that include definitions for and management of much more than just the physical components of a system, but also non-physical components such as control parameters, software features and the like. Fourth, BOMs can be customizably adapted for or accessed by multiple different entities within an organization. Fifth, BOMs can be created not just generally for a type of product but specifically for serialized instances (units) of a product and/or manufacturing plant specific product orders. Additional advantages are afforded by the rapid change management features allowing for the substitution of parts based on availability, without the extended process of an engineering change process, and allowing for the maintenance of BOM data without appending deviation records.

Referring now to non-physical product components, such as control parameter features of the disclosed technology, Fig. 2 provides a depiction of a prior art system for manually handling control parameters, and Figs. 22-33, respectively, disclose aspects of a control parameters system with improved features in accordance with the disclosed technology. Most products include a combination of hardware and software. The software may include control software as well as control parameters that define specific values within the control software that when installed for integral use with associated hardware components becomes part of a product. Software allows a product to be configured for activation of certain market features, monitoring performance, or controlled for certain operating characteristics. The triggers within the software, which dictate how the product performs, are in the form of control parameter definitions, which have typically been entered by manually keying the parameters or uploading a file into the computer control software systems associated with a product.

An example of control parameters may be appreciated from the non-limiting example of a wind turbine generator (WTG) product. Control parameters may determine different features related to how a turbine will perform. Examples may include the pitch of the wind turbine blades, yaw limits, the rate of reaction to changing wind characteristics and curtailment and coordination with a grid. Control parameters may also be used to determine when a product should shut down or to provide warning for unsafe or untenable conditions. For example, control parameters may define threshold values for identifying overheating of a gearbox or bearing, an out of synch blade pitch and/or break temperatures. It should be appreciated that different units of a product may have the same control parameters but different control parameter values depending on the model, features selected, or components used within a particular product unit.

In Fig. 2, the prior art control parameter system uses multiple physical document storage systems and a method of manual handoff among such physical systems. In such example, different hard copy documents 210, 220 and 230 may be printed and manually relayed to different physical file locations, such as represented by storage locations 215, 225 and 235. In one example, a first document 210 stored in location 215 provides parameter information when new product introduction (NPI) generates a master list of parameters for a product. A second document 220 stored in location 225 provides parameter information when a requisition segment of an organization selects specific features in an order. Finally, a third document 230 stored in location 235 provides parameter information when a commissioner implements a per site definition for product parameters. In a conventional system such as represented in Fig. 2, the source of different control parameters is not digitally related or associated to a specific product within PLM systems. Instead, parameter information is stored in multiple, disparate systems requiring data handoffs and manual operations. Parameter settings must be entered by hand and checked by hand for each product. This approach can sometimes be difficult to manage and accompanied by a significant risk of error.

Referring now to Figs. 22-33, an additional software component within a product lifecycle management (PLM) application 300 corresponds to a control parameters module 304. Control parameters module 304 generally is configured to electronically define and apply control parameters or other non-physical components for a product within product lifecycle management (PLM) application 300. Control parameters module 304 provides the capability to automatically define, apply, and manage a tailored control system of software and control parameters to a physical product at any time during the product or specific unit lifecycle. Such control parameters module 304 provides features and steps for establishing digitized control parameter definitions, and to then automatically apply those definitions and related values to a product. This generally is accomplished through the PLM application 300 based on relationships and rules for a product model, features, component parts, or other criteria used in the actual hardware components of a product. Control parameters can be hosted by the PLM system and virtually and physically managed throughout the lifecycle of a product. The actual software executables to install the software into the product hardware are also hosted within the PLM software objects, and may be communicated to the product for automatic loading either through a product CD or via a network-based communication such as via the Internet, an intranet site or other network.

Referring more particularly to Fig. 22, control parameters software module 304 may include one or more of a variety of respective software components, including the various modules represented in Fig. 22 as a create control parameter module 2202, a view and search master parameter list 2204, a change parameter module 2206, a view unit parameter list (UPL) module 2208, a control units change order (CUCO) module 2210, a notification and communication module 2212, a reporting and alerts module 2214, and a feedback and control module 2216.The different functional modules depicted in the system view of Fig. 22 are responsible for implementing various exemplary steps associated with a method of electronically defining and applying control parameters for a product within a product lifecycle management application, an example of which is illustrated in Fig. 23. It should be appreciated that different combinations of the modular features depicted in Fig. 22 and/or the functional steps depicted in Fig. 23 or otherwise may be practiced in accordance with embodiments of the disclosed technology. The correlation between functional software modules within the control parameters software system 304 of Fig. 22 and the various steps performed by the method 2300 depicted in Fig. 23 and other steps are now presented.

Referring still to Figs. 22 and 23, a first step 2302 in method 2300 corresponds tocreating control parameters and corresponding lists. More particularly, a plurality of control parameter definitions are electronically established within a network accessible database. The control parameter definitions correspond to software variables that allow the hardware components of a product to be configured to perform in a particular manner during product operation by selecting particular control parameter values for selected control parameter definitions. Control parameters may be created and controlled as data objects within a central searchable database, such as within a PLM system. Parameters are digitized & individually revision controlled within the PLM system or other centralized system. In some embodiments, mass data import functionality may be used to load values into the system, create parameters as a group, then validate before committing to a new parameter creation or changed parameter. An exemplary graphical user interface that may be used in creating a new control parameter is illustrated in Fig. 24. As shown, different fields can be created to establish a control parameter definition, including but not limited to parameter type, name, description, number, units of measure, data types, programs, and other information. Customized data fields may also be provided for establishing parameter definitions. Step 2302 of creating control parameters generally may be implemented by the create control parameter module 2202 provided within the control parameter software module 304.

As part of creating a control parameter, it should be appreciated that not only may a control parameter definition be created, but one or more control parameter values may also be tied to those definitions. As such, the broad term "control parameter" used herein is intended to encompass both the control parameter definition and control parameter value. The changes in control parameter values are critical in defining the different functionality for how a hardware device within a product is to operate.

Step 2304 in Fig. 23 00 concerns associating control parameters with specific control parameter values based on various characteristics of a product, such as but not limited to the product model, features and components. Such step more particularly involves electronically establishing a plurality of database relationships between predetermined control parameter values and selected products based on the product model, features or specific components used in the product. This enables a given product to operate in slightly different fashions depending on which parameter values are set for different models or features.

As a simple example, consider that a wind turbine may be configured to operate with different parameters depending on whether the turbine is to be operating in cold weather or warm weather. Different parameter values for these two different environments could dictate such control parameter aspects as the turbine blade speed, alarms for ambient temperature and the like. Parameter associations may be defined as software rules or application logic that define and relate parameters to features, thus eliminating subjective manual interpretation. In some embodiments, a PLM system can create parameterapplication rules automatically based on successful search criteria and records without user intervention to create logic manually in specific compatible programming formats.

Another related aspect of step 2302 concerns the creation of parameter lists. The view and search master parameter list software module 2204 of Fig. 22 may generally be responsible for implementing search options and list generation functionality of the presently disclosed technology. The digitized creation of the control parameters means that no conversion will be required for access to such parameters since they are stored as data objects with various defmed relationships in a PLM system. In some embodiments, specific parameter values can be selected then viewed and/or parameter values can be directly compared across models. Control parameters can also be related to and viewed by features such as platform, project, marketing feature, function, technical feature, where used, change record, value, rules, software version, and the like. Analysis of control parameter information can thus be conducted quickly by executing only tasks related to selecting required information, thus reducing response time to both internal and external customers.

Figs. 25 and 26 illustrate various electronicgraphical user interfaces that may be provided within the context of a searching feature available per software module 2204 of Fig. 22. More particularly, Fig. 25 shows an exemplary graphical user interface for use in viewing and searching a master parameter list within a control parameters software module. Searching can be conducted across any of the different parameters discussed above, or as shown in Fig. 25, based on one or more features including but not limited to control parameter type, name, revision, version, software version, ESS status, originator, state, marketing feature, etc. An exemplary screenshot of search results based on search options as selected in Fig. 25 is provided in Fig. 26.

Referring again to Fig. 22, a change control parameter module 2206 is primarily responsible for implementing and coordinating ongoing changes to defmed and associated control parameters. As such, primary updates to master control parameters are implemented in a single system of record, thus eliminating manual process steps and risk of error. Control parameter changes are executed on data at the parameter value level within the PLM system. It should be appreciated that parameter changes may be subject to different implementation standards than new parameter creation. For example, in one embodiment, parameter creation flows into one over one approval by one or more designated system users, after which parameter changes are directly implemented at the block change level, i.e., a mass versus individual approval process.

An exemplary graphical user interface by which a user may implement control parameter changes is illustrated in Fig. 27. As shown, changes as well as reasons for the change may be provided as data input to a change control order (CCO) so that such information can be reviewed and accepted as part of the process of changing or updating parameters. This step of generating a CCO is referred to in Fig. 23 as step 2306, and may more particularly involve providing an electronic interface for changing selected aspects of the control parameter definitions, control parameter values and the database relationships between the control parameter values and a product. Possible changes to a control parameter may be limited by controlling certain fields or types of information that is available in a CCO. It is also possible to electronically trace the creation and authorization of changes to a control parameter for further system accountability. Upon parameter creation or change, a notification by user subscription may be available for all parameter changes, as will be discussed later in more detail.

Referring again to Fig. 23, additional steps may also be implemented once a user generates a CCO request for master parameter values. Once a CCO is generated in step 2306, the CCO can be associated with affected models as indicated in step 2308 based on the previous relationship rules established in step 2304. If changes are to be approved, the necessary approvals can then be obtained in step 2310. Notifications can be sent to additional entities within a product organization in step 2312, after which point such notified entities may need to provide additional authorizations or acknowledgements. The CCO can ultimately be promoted and released in step 2314, after which point the CCO can be utilized on subsequent customer orders per step 2316 and applied to existing units viaa list of affected units or products (LAT)in step 2318.

It should be appreciated that sometimes there are many changes to control parameters that may occur as a product is going through various initial lifecycle changes, such as introduction, requisition, or other stages. In some embodiments of the disclosed technology, the process of creating control parameters and updating control parameters is implemented in an ongoing fashion until just before a product is commissioned. Until a particular unit of a product is commissioned, the control parameters for that unit are held. Upon commissioning, the control parameters for a unit are then applied based on the particular configuration of mechanically completed and installed components within the unit. This is possible because master parameters are stored in a PLM system with rules that link them to different products and customer features so that the system knows which control parameter definitions and associated values to apply to a particular product unit.

As part of implementation, the control parameters can be communicated directly to the unit, for example, via the network-linked product controller 332 of Fig. 3. By providing direct input of selected control parameter values to a control system associated with the product, the product is configured to operate in accordance with the performance definitions dictated by the control parameter definitions and control parameter values.In some embodiments, a system user such as a unit commissioner provides a level of interface such that control parameter values for a particular unit are communicated or otherwise made available to such system user, who then initiates the relay of the control parameter values to the product unit. Such software package of control parameters may be in the form of an upload file for direct upload into the product unit. Additional updates to control parameters for an operating product unit may be configured based on parameter updates through CCOs or CUCOs. These change orders may be the result of new software upgrades for a product, such that control parameter changes include a step of downloading a software upgrade package that changes selected control parameter values in accordance with a pre-established configuration of control parameter definitions.

Additional features associated with the subject control parameter technology accommodate the viewing and modification of control parameters not from the master list, but from a unit-specific list. This allows for customized and unit-specific configurations and changes that can also be tracked within the centralized structure of a PLM application.

One example of a feature that may be provided on the unit-specific level involves the generation of a unit parameter list (UPL), such as may be implemented by software module 2208 of Fig. 22. In general, a UPL may be configured to identify all control parameter definitions and corresponding control parameter values for a particular product unit or set of units. Because of the framework upon which control parameters are created in accordance with the disclosed technology, and also associated with models, customer features and the like, the generation of a UPL is possible. The UPL generation does not require conversion of parameters, and parameters values can be compared directly across units. Parameters can be related to and viewed by any of the features previously identified such as platform, project, marketing feature, function, technical feature, commercial feature, where used, by change record, value, rules and software version. Specific parameter values can then be selected for further viewing in a UPL.In some embodiments, additional analysis may be conducted via UPLs by accessing the UPLs and electronically analyzing selected control parameters to determine new parameter values to optimize product performance.

An example of a UPL screen by which unit parameters may be viewed and searched is illustrated in Fig. 28. Parameters can be selected for viewing based on a variety of features, including but not limited to model, market feature, component, requisition and the like. Parameter lists such as a UPL can also be viewed in the context of different bill-of-materials (BOM) views, such as the engineering and/or manufacturing BOM views previously described.

Another example of a feature that may be provided on the unit-specific level involves the implementation and management of a control units change order (CUCO), such as may be implemented by software module 2210 of Fig. 22. Coordination of CUCOs is similar to the coordination of CCOs described previously for changing master control parameters. However, CUCOs are concerned with changing the parameters only for a particular set of one or more product units. An exemplary interface through which a user may submit a CUCO for subsequent processing is shown in Fig. 29. An exemplary flow chart of steps that may be involved in coordinating a CUCO for specific units is shown in Fig. 33. In Fig. 33, requisition or other designated entity within an organization creates a CUCO in step 3302. All units that are affected by the CUCO are identified or added to the CUCO in step 3304. A data structure for storing the actual requested changes, i.e., control parameter markups, is created in step 3306, and the actual parameter changes are made in the parameter markups in step 3308. The parameter markups are associated with affected units in step 3310, at which point the CUCO may be promoted and released within the PLM system. Parameter changes may then be updated to the units in step 3314, resulting in automated change of the hardware operation at the unit level in accordance with the functionality dictated by the parameter changes. Optional CUCO approval or validation may also optionally occur within the process depicted in Fig. 33.

Referring again to Fig. 22, additional related features that may be provided within control parameter software module 304 include a notification and communication module 2212 and a reporting and alerts module 2214. In general, such modules 2212 and/or 2214 may be responsible for implementing a step of sending an electronic notification to selected system users when selected aspects of the control parameter definitions, control parameter values and database relationships between the parameter values and the database relationships are changed in the system. Modules 2212 and 2214 may be separate or integrated as a single communication module within the control parameter system 304. Automated notifications can be implemented based on predetermined significant parameter events throughout the lifecycle of a product. Such notifications may include automated comparisons of expected versus actual data, automated comparisons of design versus actual settings, and comparisons using product specific parameters. Inconsistencies between unit feedback and expected parameter values set within a PLM system may be flaggedas alerts for follow-up within a notification. Histories of parameter changes may be provided to trace the evolution of control parameters from creation to changes to implementation and to updating. Reporting may also be available on marketing feature linkage within the system, allowing greater visibility to parameter application. Still further communication features may be provided as a result of electronically tracking control parameters during the lifecycle of a product. As such, selected reports may indicate parameter status as defined relative to the particular present lifecycle of a product. Exemplary lifecycles may include but are not limited to product states including new product introduction (NPI) creation, requisition application, commission implementation, and operational feedback.

Subscriptions may be established for system users so that notifications are available by user subscription for all parameters such that notifications are sent upon parameter application to a unit or change of a parameter. Such user subscriptions may be configured to receive notification for all control parameter information and changes, for information and changes to specific units, or for information and changes to a group of units or a particular geographic site (e.g., a wind turbine park site containing several of the same or different types of units.) Notifications can be configured for communication via one or more of a variety of different electronic means, such as via email, SMS message or other phone-based text message, automated phone call distribution, instant internet message or other messaging means.

Another exemplary reporting feature that may be provided via one or both of the communication-related modules 2212 and/or 2214 involves a commissioner parameter configuration and validation report. Such commissioner validation report provides commissioners with high level feature lists for which parameters are applicable. Commissioners can then verify the applicability of such parameters for a particular unit without having to manually review every parameter. An example of a commissioner validation report is illustrated in Fig. 31, which shows for a particular site such information as the parameter names, initial values, units of measure (UoM), parameter descriptions and an identification of whether a parameter is a marketing feature, a component, or a requisition.

Referring once again to Fig. 22, an additional feature that may be provided within control parameter software module 304 corresponds to a feedback and control module 2216. As previously mentioned, it is possible in accordance with the disclosed technology to analyze the lists of parameters and corresponding parameter values on a unit or site based level in order to optimize unit performance or determine other information that would be beneficial for a system user. As such, improved parameter values may be suggested for subsequent upload to a unit or units. In some embodiments, analysis can be conducted on data directly available within the system of record. Analysis may be limited to core tasks as opposed to tasks required for data gathering including compiling and organizing data from rigid, disconnected sources. Automated data analysis provides a capability to perform quantitative and qualitative analysis with minimal interaction.

Referring now to Fig. 32, an exemplary flow chart is provided that illustrates aspects of the interaction among data structures associated with managing control parameters for an exemplary wind turbine generator (WTG) unit 3200. In general, the types of control parameters available for unit 3200 come from three different types of sources, namely model specific, individual components, marketing features and requisition inputs. Examples of marketing features shown in Fig. 32 may be associated with a particular product configuration 3202 that is defined by the model type 3204 associated with the WTG unit 3200, as well as a standard weather marketing feature 3206 and a cold weather marketing feature 3208. Each of the features designated by elements 3204, 3206 and 3208 are defined by a plurality of associated control parameters including parameter definitions and parameter values. In some examples, it should be appreciated that features have similar control parameter definitions but different values. For example, both standard weather and cold weather product features may have similar control parameter definitions but different operating values for those parameters. Examples of components shown in Fig. 32 may be associated with a component gearbox 3210 and component generator 3212, both of which may also include one or more parameter definitions and values that are used to ultimately define the digitized parameters for unit 3200. All of the control parameters that contribute to making up a unit 3200 can then be compiled in accordance with the presently disclosed technology into a unit parameter list (UPL), which is represented as element 3214 in Fig. 32. Additional information related to the unit 3200 not shown in the UPL listing 3214 of Fig. 32 are also available and can be customized in accordance with the disclosed technology.

Having now described the control parameter module 304 in detail, it should be appreciated from the disclosure that such system and method provides many advantages to system users. In particular, the presently disclosed technology provides for a system of defming and managing a holistic electronic representation of various products, including virtual and non-virtual, physical and non-physical components thereof. In addition to product definition and management, the disclosed features provide means for digitally delivering and implementing the non-physical components of specific units of a product including control parameters and the like. Such features provide definition and rigorous change control of the parameters and/or software within a PLM system of record or other integrated and comprehensive system as opposed to multiple disparate systems. Database associations can be automatically applied as rules to define a specific list of parameters for a specific unit (serialized instance of a product.) Model rules can be automatically applied to select the proper software for a particular product. Traceability of parameters or software can be provided to a specific unit through database relationships. Traceability of changes to the software and/or parameters can be provided, which are associated to the specific product unit. Direct input of data to actual product control systems can be implemented without manual intervention. Customer access can be provided to control parameter information for use in customer record keeping and/or analysis.

While the present subject matter has been described in detail with respect to specific exemplary embodiments and methods thereof, it will be appreciated that those skilled in the art, upon attaining an understanding of the foregoing may readily produce alterations to, variations of, and equivalents to such embodiments. Accordingly, the scope of the present disclosure is by way of example rather than by way of limitation, and the subject disclosure does not preclude inclusion of such modifications, variations and/or additions to the present subject matter as would be readily apparent to one of ordinary skill in the art.

Various aspects and embodiments of the present invention are defined by the following numbered clauses:
1. A method of electronically creating and managing a bill-of-materials for order-specific product configurations, said method comprising:
   electronically providing a pre-established mapping of technical feature rules that relate commercial feature options for a product that are available for selection by a customer to different combinations of technical functions and parts for potential use in a product;
   electronically generating an order-specific bill-of-materials based on commercial feature options provided as input and the pre-established mapping of technical features, wherein the order-specific bill-of-materials comprises an order-specific list of different combinations of technical functions and parts for a given product configuration;
   electronically providing a pre-established manufacturing template that maps the functions of a product to a logical manufacturing structure;
   electronically generating a unit bill-of-materials by combining selected aspects of the order-specific bill-of-materials with the pre-established manufacturing template associated with that particular type of product; and,
   providing a graphical user interface configured for viewing one or more of the electronically generated order-specific bill-of-materials and the unit bill-of-materials.
2. The method of clause 1, further comprising a step of electronically implementing a bill-of-materials markup that changes one or more selected parts within the unit bill-of-materials to other design equivalents.
3. The method of any preceding clause, further comprising a step of integrating selected aspects of the unit bill-of-materials with an enterprise resource planning software application.
4. The method of preceding clause, further comprising a step of associating markups to products such that markups can be used to apply pre-approved changes to unit bill-of-materials created from that product.
5. The method of any preceding clause, further comprising a step of identifying different stages throughout the lifecycle of a unit and controlling selected methods and data that can be applied to manage the unit bill-of-materials at the different stages throughout the lifecycle of the unit.
6. The method of any preceding clause, wherein the technical functions provided in the pre-established mapping correspond to particular components within the product and may include a single type of part or multiple parts in an inseparable assembly.
7. The method of any preceding clause, wherein the pre-established manufacturing template is specific to the product and a given manufacturing plant.
8. The method of any preceding clause, wherein the pre-established manufacturing template comprises one or more of a generic manufacturing parts hierarchy, a mapping between technical functions and manufacturing parent parts, and an identification of any re-usable manufacturing assemblies for use with a product.
9. The method of any preceding clause, wherein said graphical user interface is selectable from a plurality of different views, including at least an engineering view and a manufacturing view.
10. The method of any preceding clause, wherein selected parts within said unit bill-of-materials further comprise a plurality of software control parameters that define how the hardware portions of the selected parts are configured to perform during product operation.
11. A non-transitory computer-readable medium comprising executable instructions configured to control a processing device to implement a method as set forth in any preceding clause.
12. A method of electronically defining and applying non-physical components such as control parameters for a product within a product definition application, comprising:
   electronically establishing a plurality of control parameter definitions within a network accessible database, the control parameter definitions comprising software variables that allow the hardware components of a product to be monitored or controlled to perform in a particular manner during product operation by selecting particular control parameter values for selected control parameter definitions;
   electronically establishing a plurality of database relationships between predetermined control parameter values and selected products based on the product model, features, or specific components, or other attributes used in the product;
   providing an electronic interface for changing selected aspects of the control parameter definitions, control parameter values and the database relationships between the control parameter values and a product; and,
   providing direct input of selected control parameter values to a control system associated with the product such that the product is controlledor monitored to operate in accordance with the performance definitions dictated by the control parameter definitions and control parameter values.
13. The method of any preceding clause, further comprising a step of generating a unit parameter list (UPL) that identifies all control parameter definitions and corresponding control parameter values for a particular product unit.
14. The method of any preceding clause, further comprising a step of accessing the unit parameter list (UPL) and electronically analyzing selected control parameters to determine new parameter values to optimize product performance.
15. The method of any preceding clause, further comprising a step of providing an electronic interface with which a system user can search among control parameters based on one or more features comprising parameter type, name, version, and originator, or other attributes.
16. The method of any preceding clause, further comprising a step of sending an electronic notification to selected system users when selected aspects of the control parameter definitions, control parameter values and database relationships between the parameter values and the database relationships are changed in the system.
17. The method of any preceding clause, further comprising a step of electronically tracking control parameters during the lifecycle of a product, wherein the product lifecycle comprises a plurality of product states including new product introduction (NPI) creation, requisition application, commission implementation, and operational feedback.
18. The method of any preceding clause, wherein said step of providing direct input of selected control parameter values to a control system associated with a product is first implemented when a product reaches a physically defined product state.
19. The method of any preceding clause, further comprising a step of downloading a software upgrade package that changes selected control parameter values in accordance with a pre-established configuration of control parameter definitions.
20. A non-transitory computer-readable medium comprising executable instructions configured to control a processing device to implement a method as set forth in any preceding clause.

## Claims

1. A method of electronically creating and managing a bill-of-materials for order-specific product configurations, said method comprising:
electronically providing (502) a pre-established mapping of technical feature rules that relate commercial feature options (622) for a product that are available for selection by a customer to different combinations of technical functions (614) and parts(610) for potential use in a product;
electronically generating (504) an order-specific bill-of-materials (414) based on commercial feature options provided as input and the pre-established mapping of technical features, wherein the order-specific bill-of-materials (414) comprises an order-specific list of different combinations of technical functions and parts for a given product configuration;
electronically providing (506) a pre-established manufacturing template (422) that maps the functions of a product to a logical manufacturing structure;
electronically generating (508) a unit bill-of-materials (432) by combining selected aspects of the order-specific bill-of-materials (414) with the pre-established manufacturing template (422) associated with that particular type of product; and,
providing(510) a graphical user interface configured for viewing one or more of the electronically generated order-specific bill-of-materials (414) and the unit bill-of-materials (432).

2. The method of claim 1, further comprising a step of electronically implementing a bill-of-materials markup (446) that changes one or more selected parts within the unit bill-of-materials to other design equivalents (512).

3. The method of any preceding claim, further comprising a step of associating markups to products such that markups can be used to apply pre-approved changes to unit bill-of-materials created from that product (516).

4. The method of any preceding claim, further comprising a step of identifying different stages throughout the lifecycle of a unit and controlling selected methods and data that can be applied to manage the unit bill-of-materials at the different stages throughout the lifecycle of the unit (518).

5. The method of any preceding claim, wherein the pre-established manufacturing template (422) is specific to the product and a given manufacturing plant.

6. The method of any preceding claim, wherein the pre-established manufacturing template (422) comprises one or more of a generic manufacturing parts hierarchy (902), a mapping between technical functions and manufacturing parent parts (904), and an identification of any re-usable manufacturing assemblies (906) for use with a product.

7. The method of any preceding claim, wherein said graphical user interface is selectable from a plurality of different views, including at least an engineering view (1100) and a manufacturing view (1200).

8. A method of electronically defming and applying non-physical components such as control parameters for a product within a product definition application, comprising:
electronically establishing(2302) a plurality of control parameter definitions within a network accessible database, the control parameter definitions comprising software variables that allow the hardware components of a product to be monitored or controlled to perform in a particular manner during product operation by selecting particular control parameter values for selected control parameter definitions:
electronically establishing (2304) a plurality of database relationships between predetermined control parameter values and selected products based on the product model, features, or specific components, or other attributes used in the product;
providing an electronic interface (2206, 2210) for changing selected aspects of the control parameter definitions, control parameter values and the database relationships between the control parameter values and a product; and,
providing direct input of selected control parameter values to a control system associated with the product such that the product is controlledor monitored to operate in accordance with the performance definitions dictated by the control parameter definitions and control parameter values (2216, 2318).

9. The method of claim 8, further comprising a step of generating a unit parameter list (UPL) that identifies all control parameter definitions and corresponding control parameter values for a particular product unit (2208).

10. The method of claim 9, further comprising a step of accessing the unit parameter list (UPL) and electronically analyzing selected control parameters to determine new parameter values to optimize product performance.

11. The method of any of claims 8 to 10, further comprising a step of providing an electronic interface with which a system user can search among control parameters based on one or more features comprising parameter type, name, version, and originator, or other attributes (2204).

12. The method of any of claims 8 to 11, further comprising a step of sending an electronic notification (2212) to selected system users when selected aspects of the control parameter definitions, control parameter values and database relationships between the parameter values and the database relationships are changed in the system.

13. The method of any of claims 8 to 12, wherein said step of providing direct input of selected control parameter values to a control system associated with a product is first implemented when a product reaches a physically defined product state.

14. The method of any of claims 8 to 13, further comprising a step of downloading a software upgrade package that changes selected control parameter values in accordance with a pre-established configuration of control parameter definitions.

15. A non-transitory computer-readable medium comprising executable instructions configured to control a processing device to implement a method as set forth in any one of claims 1 to 14.
